(19) Europäisches Patentamt
European Patent Office
Office européen des brevets

(11) **EP 1 276 649 B1**

(12) **EUROPÄISCHE PATENTSCHRIFT**

(45) Veröffentlichungstag und Bekanntmachung des Hinweises auf die Patenterteilung:
**05.08.2015 Patentblatt 2015/32**

(51) Int Cl.:
***B60T 8/1755*** *(2006.01)*

(21) Anmeldenummer: **01943243.4**

(22) Anmeldetag: **11.04.2001**

(86) Internationale Anmeldenummer:
**PCT/EP2001/004143**

(87) Internationale Veröffentlichungsnummer:
**WO 2001/081139 (01.11.2001 Gazette 2001/44)**

(54) **VERFAHREN ZUR ONLINE ERMITTLUNG VON GRÖSSEN DER FAHRDYNAMIK FÜR EIN KRAFTFAHRZEUG**

METHOD FOR THE ONLINE DETERMINATION OF VALUES OF THE DYNAMICS OF VEHICLE MOVEMENT OF A MOTOR VEHICLE

PROCEDE PERMETTANT DE DETERMINER EN DIRECT DES GRANDEURS CONCERNANT LA DYNAMIQUE DE CONDUITE D'UN VEHICULE AUTOMOBILE

(84) Benannte Vertragsstaaten:
**DE FR IT**

(30) Priorität: **19.04.2000 DE 10019620**
**15.09.2000 DE 10046077**

(43) Veröffentlichungstag der Anmeldung:
**22.01.2003 Patentblatt 2003/04**

(73) Patentinhaber: **Continental Teves AG & Co. oHG**
**60488 Frankfurt (DE)**

(72) Erfinder:
• **LÜDERS, Ulrich**
**31303 Burgdorf (DE)**
• **OEHLER, Rainer**
**64295 Darmstadt (DE)**
• **RAITZ VON FRENTZ, Hubertus**
**65936 Frankfurt (DE)**
• **RASTE, Thomas**
**61440 Oberursel (DE)**
• **ROLL, Georg**
**63150 Heusenstamm (DE)**

(56) Entgegenhaltungen:
EP-A- 0 914 997     DE-A- 19 854 633
DE-A- 19 935 805    DE-A1- 19 744 725
US-A- 5 455 770

EP 1 276 649 B1

**Beschreibung**

Die Erfindung betrifft ein Verfahren zur online Ermittlung von Größen der Fahrdynamik für ein Kraftfahrzeug, eine Fahrdynamikregelung und eine Verwendung des Verfahrens und der Fahrdynamikregelung.

Stand der Technik ist ein ESP-System mit einer Gierratenregelung basierend auf einem genauen und im Verhältnis zum Gesamtsystem teuren Gierratensensor. Bekannte ABS, ASR und Fahrdynamikregelsysteme (z.B. ESP = Elektronisches Stabilitätsprogramm) werten die Signale von Raddrehzahlsensoren (ABS, ASR) und zusätzlichen Fahrervorgaben- und Fahrdynamiksensoren (ESP) aus, um instabile Fahrzeugbewegungen zu erkennen und sicher zu beherrschen. Die Vorgaben des Fahrers werden durch einen Lenkwinkelsensor, Drucksensoren im Hauptbremszylinder und das Motormanagement erfasst. Typische Fahrdynamiksensoren sind ein Querbeschleunigungssensor und bei Vierradantrieb evtl. ein Längsbeschleunigungssensor. Der für ESP wichtigste Sensor ist der Gierratensensor, der die Drehgeschwindigkeit des Fahrzeuges um die Höchachse mißt.

Aus der DE 197 44 725 A1 geht ein Verfahren zur Bestimmung von Größen der Fahrdynamik eines Kraftfahrzeuges hervor, bei dem die Bestimmung auf Basis der auf die einzelnen Räder wirkenden Kräfte erfolgt, die mit Hilfe von Reifensensoren erfasst werden. Unter Verwendung von Korrekturstufen werden die auf Basis der Radkräfte berechneten Größen in Abhängigkeit von der Fahrsituation und weiterer Messgrößengewichtet, die mit herkömmlicher Sensorik gewonnen werden. Ein Vergleich zwischen einer gemessenen und einer geschätzten Gierrate zur Verbesserung der Ermittlung des Schwimmwinkels ist jedoch nicht vorgesehen.

Ein Fahrdynamikregler gemäß dem Oberbegriff des unabhängigen Anspruchs 25 ist aus der EP 0 914 997 A2 bekannt.

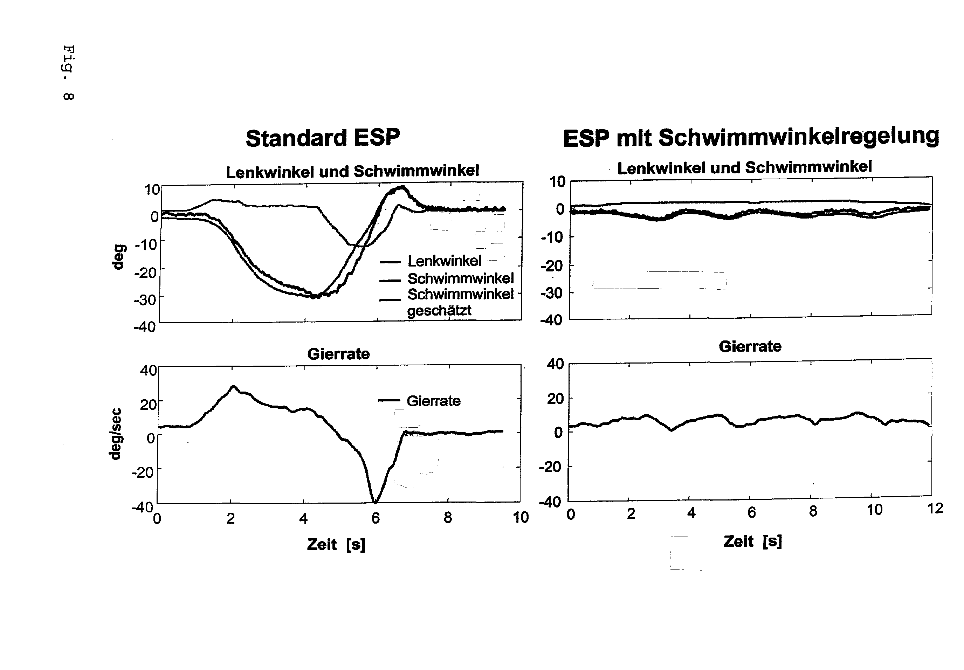

Die Fahrdynamikregelung ist als Folgeregelung für die Gierrate $\dot{\psi}$ realisiert. Der Sollwert der Gierrate wird mittels eines Einspur-Fahrzeugmodells online generiert. Derart aufgebaute ESP-Systeme lassen in bestimmten Fahrsituationen bei einer kleinen Regelabweichung (Differenz zwischen Soll- und Istgierrate) einen großen Schwimmwinkel (Winkel $\beta$ zwischen Fahrzeuglängsachse und Geschwindigkeitsvektor V) zu, wie die Figur 8, linke Bildhälfte zeigt. Der Schwimmwinkel kann begrenzt werden, wenn der Fahrer durch Lenkkorrekturen die Regelabweichung vergrößert und damit in Folge einen stärkeren Regeleingriff der Gierratenregelung bewirkt.

Der Erfindung liegt die Aufgabe zugrunde die Güte der Regelung zu verbessern und die Anforderungen an den Fahrer zu verringern.

Diese Aufgabe wird durch die Merkmale der unabhängigen Ansprüche 1 und 25 gelöst.

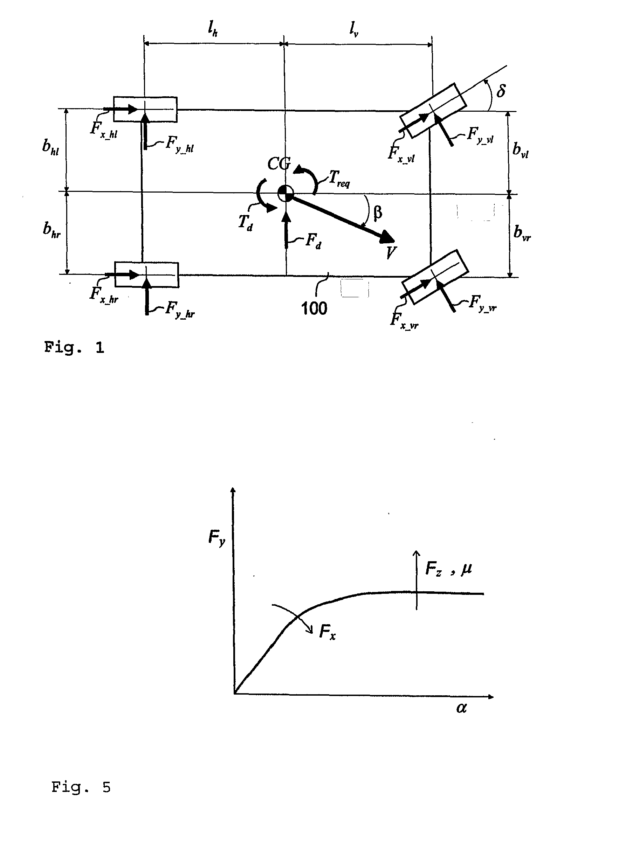

Vorteilhaft wird dies erreicht, wenn man von der Eingrößenregelung auf eine Mehrgrößenregelung übergeht. Hierbei wird ausgenutzt, dass der querdynamische Zustand des Fahrzeugs in erster Näherung durch die beiden Größen Gierrate $\dot{\psi}$ und Schwimmwinkel $\beta$ charakterisiert ist. In Figur 1 sind diese Größen dargestellt. Eine direkte Messung des Schwimmwinkels für künftige ESP-Systeme ist aus heutiger Sicht wirtschaftlich nicht vertretbar. Stattdessen wird versucht, den Schwimmwinkel aus den Signalen der vorhandenen Sensorik zu schätzen.

Die Aufgabe wird erfindungsgemäß bei einem gattungsgemäßen Verfahren durch die folgenden Schritte gelöst, Ermitteln von geschätzten Ausgangsgrößen $\hat{y}_m$ nach Maßgabe ermittelter und/oder geschätzter Eingangsgrößen $u$ und vorgegebener oder vorhergesagter Fahrzeugzustandsgrößen $\hat{x}$ und gegebenenfalls weiterer Größen,

Vergleichen der geschätzten Ausgangsgrößen $\hat{y}_m$ mit gemessenen Ausgangsgrößen $y_m$, und

Ermitteln der geschätzten Größen der Fahrdynamik $\hat{x}$ $(t_k/t_k)$ nach Maßgabe des Vergleichsergebnisses und ggf. weiterer Kriterien.

Nach einer vorteilhaften Weiterbildung ist das Verfahren gekennzeichnet durch den Schritt:

Modellbasiertes Ermitteln der vorhergesagten Fahrzeugzustandsgrößen $\hat{x}$ ach Maßgabe ermittelter und/oder geschätzter Eingangsgrößen $u$ und den Größen der Fahrdynamik $\hat{x}$ $(t_k/t_k)$.

Dabei werden vorzugsweise die folgenden Eingangsgrößen $u(t) = \hat{V}_x, \delta, F_x$ ; $\hat{F}_z$ oder $F_z$, $\hat{\mu}_i$ oder $\mu_i$ bei der Schätzung der vorhergesagten Fahrzeugzustandsgrößen $\hat{x}$ und bei der Ermittlung der Größen der Fahrdynamik $\hat{x}$ $(t_k/t_k)$ berücksichtigt, mit $\hat{V}_x$ = geschätzte Fahrzeuglängsgeschwindigkeit, $\delta$ = der gemessene Lenkwinkel, $F_x$ = die ermittelten Reifen- oder Radlängskräfte, $\hat{F}_z$ = die geschätzten Aufstandskräfte oder $F_z$ = die ermittelten Aufstandskräfte, $\hat{\mu}_i$ = die geschätzten Reibungs-Koeffizienten für den Reifen-Fahrbahn Kontakt oder $\mu_i$ = die ermittelten Reibungs-Koeffizienten für den Reifen-Fahrbahn Kontakt. Als Größen der Fahrdynamik und der vorhergesagten Fahrzeugzustandsgrößen $\hat{x}$ =

$[\hat{V}_y, \dot{\hat{\psi}}, \hat{F}_d]^T$ werden bevorzugt die Fahrzeugquergeschwindigkeit $\hat{V}_y$, die Gierrate $\dot{\hat{\psi}}$ und die Störkräfte $\hat{F}_d$, die als nicht meßbare Eingangsgrößen geschätzt werden, ermittelt.

Als weitere Größen der Fahrdynamik und der vorhergesagten Fahrzeugzustandsgrößen $\hat{x} = [\hat{T}_d, \mu_i]^T$ werden die Störmomente $M_d$ und die Reibungs-Koeffizienten $\mu_i$ als nichtmessbare Eingangsgrößen ermittelt.

Vorteilhaft erfolgt die vorhergesagten Fahrzeugzustandsgrößen x für den nächsten Abtastzeitpunkt $t_{k+1}$ durch Integration nach der nichtlinearen Gleichung $\hat{\mathbf{x}}(t_{k+1}|t_k) = \hat{\mathbf{x}}(t_k|t_k) + \int\limits_{t_k}^{t_{k+1}} \mathbf{f}(\hat{\mathbf{x}}(t), \mathbf{u}(t))\, dt$ mit der Anfangsbedingung $\hat{x}(t_k\,/\,t_k)$, wobei

$\hat{x}$     geschätzter Zustandsvektor,

$f(.)$     kontinuierliche, nichtlineare Systemgleichungen

$\mathbf{x}(t_k)$     Signal zum diskreten Zeitpunkt $t_k$ . (aktueller Zeitpunkt)

$\hat{\mathbf{x}}(t_k|t_{k-1})$     geschätztes Signal zum Zeitpunkt $t_k$, wobei nur Informationen vom letzten Zeitpunkt $t_{k-1}$ verwendet sind

$\hat{\mathbf{x}}(t_k|t_k)$     geschätztes Signal zum Zeitpunkt $t_k$, wobei Informationen vom aktuellen Zeitpunkt $t_k$ verwendet sind

$\hat{\mathbf{x}}(t_{k+1}|t_k)$     vorhergesagtes Signal für den nächsten Zeitpunkt $t_{k+1}$, wobei nur Informationen vom aktuellen Zeitpunkt $t_k$ verwendet sind

$t_k$     diskreter Zeitpunkt

ist.

Es ist zweckmäßig, daß als Ausgangsgröße $\hat{y}_m = [\hat{a}_y]$ die Querbeschleunigung $a_y$ geschätzt wird.

Es ist auch zweckmäßig, daß als weitere Ausgangsgröße $\hat{y}_m = [\hat{\psi}]$ die Gierrate $\dot{\psi}$ geschätzt wird.

Ferner ist es zweckmäßig, daß als weitere Ausgangsgrößen $\hat{y}_m = [\hat{F}_y]^T$ die Reifen- oder Radquerkräfte $F_y$. geschätzt werden.

Vorteilhaft ist, dass die Ausgangsgrößen $\hat{y}_m$ für den Abtastzeitpunkt $t_k$ nach der diskreten, nichtlinearen Gleichung $h_m$

$$\hat{\mathbf{y}}_m(t_k|t_{k-1}) = \mathbf{h}_m(\hat{\mathbf{x}}(t_k|t_{k-1}), \mathbf{u}_m(t_k))$$

aus den Fahrzeugzustandsgrößen $\hat{\mathbf{x}}(t_k|t_{k-1})$ und den Eingangsgrößen $u_m(t_k)$
geschätzt werden, mit

$\hat{y}_m$     geschätzter Ausgangsvektor der meßbaren Ausgänge

$\hat{x}$     geschätzter Zustandsvektor,

$u_m$     Eingangsvektor der meßbaren Eingänge

$\mathbf{h}_m(.)$     diskrete, nichtlineare Meßgleichungen

$\hat{x}(t_k|t_{k-1})$     geschätztes Signal zum Zeitpunkt $t_k$, wobei nur Informationen vom letzten Zeitpunkt $t_{k-1}$ verwendet sind

$\hat{y}(t_k|t_{k-1})$     geschätztes Signal zum Zeitpunkt $t_k$, wobei nur Informationen vom letzten Zeitpunkt $t_{k-1}$ verwendet sind

$t_k$     diskreter Zeitpunkt.

Es ist besonders zweckmäßig, daß mindestens eine der geschätzten Ausgangsgrößen $\hat{y}_m = [\hat{F}_y, \hat{a}_y, \dot{\hat{\psi}}]^T$ mit mindestens einer der ermittelten (direkt oder indirekt mittels Sensoren erfaßten) Ausgangsgrößen $y_m(t_k) = [F_y, \alpha_y, \dot{\psi}]^T$ verglichen wird und die Vergleichsergebnisse $e(t_k)$ vorzugsweise über eine Verstärkungsmatrix K an einem Summationspunkt für die Korrektur der Fahrzeugzustandsgröße $\hat{\mathbf{x}}(t_k|t_{k-1})$ zur Verfügung gestellt werden, wobei $\hat{\mathbf{x}}(t_k|t_{k-1})=$ geschätztes Signal zum Zeitpunkt $t_k$, wobei Informationen vom letzten Zeitpunkt $t_{k-1}$ verwendet sind.

Es ist vorteilhaft, daß die Verstärkungsmatrix K zu jedem Zeitpunkt $t_k$ nach der Beziehung $K(t_k) = f(\hat{A}, G)$ bestimmt wird, mit G = Informationsgehalt der ermittelten (gemessenen) Signale und $\hat{A}$ = geschätzter Arbeitspunkt des nichtlinearen Fahrzeugmodells.

Vorteilhaft ist, daß die Korrektur der Größen der Fahrdynamik nach der Beziehung

$$\hat{\mathbf{x}}(t_k|t_k) = \hat{\mathbf{x}}(t_k|t_{k-1}) + \mathbf{K}(t_k)\,\mathbf{e}(t_k)$$

erfolgt.

Besonders vorteilhaft ist das Verfahren durch den Schritt: Ermitteln der geschätzten Regelgrößen $y_k$ zum Zeitpunkt $t_k$ unter Verwendung von Informationen vom aktuellen Zeitpunkt aus den Größen der Fahrdynamik $\mathbf{x}(t_k|t_k)$ und den Eingangsgrößen $u_m(t_k)$ nach der Beziehung,

$$\hat{\mathbf{y}}_r(t_k|t_k) = \mathbf{h}_r(\hat{\mathbf{x}}(t_k|t_k), \mathbf{u}_m(t_k)) \; ,$$

mit $u_m(t_k)$ = **Vektor** der erfaßten diskreten Eingangsgrößen.

Weiterhin ist das Verfahren vorteilhaft durch den Schritt: Ermitteln der geschätzten Regelgrößen $y_r$ zum Zeitpunkt $t_k$ unter Verwendung von Informationen vom letzten Zeitpunkt aus den Fahrzeugzustandsgrößen $\hat{x}(t_k|t_{k-1})$ und den Eingangsgrößen $u_m(t_k)$ nach der Beziehung,

$$\hat{\mathbf{y}}_r(t_k|t_{k-1}) = \mathbf{h}_r(\hat{\mathbf{x}}(t_k|t_{k-1}), \mathbf{u}_m(t_k)) \; ,$$

mit $u_m(t_k)$= Vektor der erfaßten diskreten Eingangsgrößen.

Eine besonders vorteilhafte Mehrgrößenregelung wird erreicht durch die Schritte:

Ermitteln eines geschätzten Schwimmwinkels $\hat{\beta}$ als Regegelgröße $\hat{y}_r(t_k|t_{k-1})$ bzw. $\hat{y}_r(t_k|t_k)$,
Vergleichen des geschätzten Schwimmwinkels $\hat{\beta}$ mit einer Schwimmwinkel-Referenzgröße $\beta_{ref}$,

Bilden eines Zusatzgiermoments $T_{req}$ aus der geschätzten Differenz aus der Schwimmwinkel-Referenzgröße $\beta_{ref}$ und dem Schwimmwinkel $\hat{\beta}$ und einer Differenz aus einer Gierraten-Referenzgröße $\dot{\psi}_{ref}$ und einer Gierrate $\dot{\psi}$ oder $\dot{\psi}$ oder $\dot{\psi}_{linear}$ und Ansteuerung mindestens einer Radbremse des Kraftfahrzeugs nach Maßgabe des Zusatzgiermoments $T_{req}$.

Vorteilhaft wird das Verfahren in einer Fahrdynamikregelung, insbesondere ESP- oder Fahrwerksregelung, verwendet.

Ein gattungsgemäßer Fahrdynamikregler umfassend erste Ermittlungseinheit (402) zur Schätzung der Regelgrößen $\hat{\beta}$ und/oder $\hat{\alpha}_v, \hat{\alpha}_h$ aus den Eingangsgrößen $V_x, \delta, F_x, \dot{\psi}, \hat{\mu}, a_y, \hat{F}_z$, und/oder ggf. weiteren Größen $F_z, \dot{\psi}_{linear}$, Deaktivierungslogik (405) zur Abschaltung der Schwimmwinkelregelung nach Maßgabe der Eingangsgrößen $a_v, \alpha_h$ und/oder Größen, die Fahrsituationen des Kraftfahrzeugs wiedergeben, wie z.B. bei Rückwärtsfahrt, Fahrt in einer Steilkurve u.dgl. zweite Ermittlungseinheit (404) zur adaptiven Schwimmwinkel-Momentenberechnung aus den Eingangsgrößen $\hat{\beta}$, $\beta_{ref}, \dot{\psi}, V_{ref}$ bzw. $Vx, \hat{\mu}_i$,

dritte Ermittlungseinheit (406) zur Arbitrierung eines Zusatzgiermoments $T_{req}$ aus dem Giermoment $T_{reg\_ESP}$ und $T_{reg\_beta}$ und ist erfindungsgemäß dadurch gekennzeichnet, dass die erste Ermittlungseinheit mit einem Aufstandskraftmodell zum Schätzen der Aufstandskräfte des Kraftfahrzeugs aus den Eingangsgrößen der im Fahrzeugsschwerpunkt angreifenden Längs- und Querbeschleunigung ax und ay verbuden ist.

Vorteilhafte Weiterbildungen der Erfindung sind in den Unteransprüchen beschrieben.

Gegenstand der Erfindung ist es, mit einem Schätzverfahren basierend auf einem nichtlinearen Fahrzeugmodell und Verwendung von Reifen- oder Radkräften, für eine Fahrdynamikregelung geeignete und hinreichend genaue Regelgrößen (die den Fahrzustandsgrößen entsprechen oder sich direkt daraus ableiten lassen) wie Gierrate, Schwimmwinkel, Wankwinkel, Nickwinkel zu schätzen. Die Reifen- oder Radkräfte können vorzugsweise während der Fahrt unter Benutzung des Reifens mit einem Seitenwandtorsions-Sensor gemessen. Der "Seitenwandtorsions- oder SWT-Sensor" basiert auf der Idee, die Verformung des Reifens mittels Sensoren am Fahrwerk zu messen und diese Verformung aufgrund der elastischen Eigenschaften auf die wirkenden Kräfte zu schließen.

Je nach geforderten Regelgrößen (Regelaufgabe) und erforderlicher Güte der Schätzung können weitere Sensorsignale aus Längs-, Quer- und Wankbewegung des Fahrzeuges (z.B. Querbeschleunigung, Raddrehzahlen, Gierrate und/oder Wankrate) in die Schätzung einbezogen werden.

Mit diesen geschätzten Regelgrößen werden neue Fahrdynamikregelsysteme entworfen.

Für die neue reifen- oder radkraftgestützte Fahrdynamikregelung wurde das konventionelle ESP-System nach einem vorteilhaften Ausführungsbeispiel mit der SWT-Reifensensorik gekoppelt und um eine, jedoch von der SWT-Reifensensorik nicht abhängige Schwimmwinkelregelung erweitert. Dabei sind die Reifen- oder Radlängskräfte $F_x$ und Reifen- oder Radquerkräfte $F_y$ bekannt, die ein Modell zur Schätzung des Schwimmwinkels stützen und eine Güte der Schwimmwinkelschätzung erreichen, die für eine Regelung ausreichend ist.

Mit dieser kombinierten Gierraten- und Schwimmwinkelregelung ist eine feinfühligere und im Hinblick auf den Durchschnittsfahrer noch leistungsfähigere Stabilitätsregelung darstellbar. Vom Fahrer als unangenehm empfundene bzw. ab einer bestimmten Größe nicht mehr beherrschbare Schwimmwinkel werden vermieden. Der Lenkaufwand wird bei fahrdynamisch kritischen Situationen erheblich reduziert.

Dies wird deutlich bei einem Vergleich eines Fahrmanövers mit Standard-ESP und ESP mit Schwimmwinkelregelung. Bei einer Kreisfahrt im Grenzbereich auf Schnee baut sich bei Reduktion der Antriebskraft beim Standard-ESP ein Schwimmwinkel auf, der nur durch eine heftige Lenkreaktion abgefangen werden kann (Figur 8, linke Seite).

Die Gierrateninformation allein reicht zur Stabilisierung nicht aus.

Beim ESP mit Schwimmwinkelregelung wird der Schwimmwinkel dagegen auf einen für einen Durchschnittsfahrer beherrschbare Größe begrenzt. Aufgrund der reifen- oder radkraftgestützten Schätzung stimmen gemessener und geschätzter Schwimmwinkel hinreichend genau überein. Vom Fahrer sind keine zusätzlichen Lenkaktivitäten notwendig (vgl. Fig. 8).

2. Vorteile der Erfindung

Durch die modellgestützte Verknüpfung von Signalen kostengünstiger Sensoren können bisher nicht kostengünstig meßbare Signale (z.B. Schwimmwinkel), die für eine Fahrdynamikregelung benötigt werden, geschätzt werden. Basierend auf diesen geschätzten Regelgrößen sind unter anderem folgende neue Fahrdynamik-Regelstrukturen möglich:

- Ersatz des Gierratensensors (Kostenreduzierung). Das Signal wird durch eine geschätzte Größe ermittelt. Das bekannte ESP-System wird in seiner Struktur beibehalten.

- Neue Fahrstabilisierungs-Regelstrukturen verbunden mit einer Verbesserung der Regelgüte durch eine Schwimmwinkelregelung oder Mehrgrößenregelung (kombinierte Gierraten-/ Schwimmwinkelregelung mit einer Vorgabe von Referenzwerten für Schwimmwinkel und Gierrate).

- Neue aktive Lenksysteme auf der Basis der Schwimmwinkelermittlung.

3. Beschreibung des Verfahrens

Im Folgenden werden das Verfahren zur Schätzung der Zustände und der daraus abgeleiteten Regelgrößen des Fahrzeuges und die Struktur der Fahrdynamikregelung erläutert, die auf den geschätzten Regelgrößen basiert.

3.1. Schätzung der Regelgrößen

Für das Verfahren werden die durch den Reifen-Fahrbahn Kontakt auftretenden, auf das Fahrzeug einwirkenden Kräfte verwendet. Diese Kräfte können Radumfangskräfte, Querkräfte und/oder Radaufstandskräfte sein. In Fig.1 sind beispielhaft Radumfangskräfte (Längskräfte) $F_x$ und Querkräfte $F_y$ in den radfesten Koordinatensystemen bezogen auf die Radnabenmittelpunkte dargestellt. Zur Bestimmung der Kräfte wird ein SWT-Sensor eingesetzt, der zur Messung der Verformung des Reifens bzw. des Rades ein magnetisches Prinzip verwendet. Für SWT-Encoder wurde eine spezielle hartmagnetische Gummimischung entwickelt, die in die Reifenseitenwand eingebracht wird. Die Gummimischung wird nach der Vulkanisation des Reifens magnetisiert. Bei dem entstehenden Polmuster wechseln sich Nord- und Südpole ab (DE 196 20 581). Zwei aktive Magnetfeldsensoren, die am Fahrwerk angebracht sind, messen, wie sich das Magnetfeld bei der Rotation des Reifens ändert. Durch die Wahl von aktiven Sensoren erhält man bis zu sehr kleinen Geschwindigkeiten auswertbare Signale. Im Gegensatz zu induktiven Sensoren ist die Signalamplitude unabhängig von der Drehzahl des Reifens. Aus der Phasendifferenz zwischen den beiden Sensorsignalen kann die longitudinale Verformung berechnet werden. Die Amplitude ändert sich umgekehrt zum Abstand zwischen Sensoren und Seitenwand, so dass durch sie die laterale Verformung der Corner (Reifen, Felge, Aufhängung) ermittelt werden kann. Aus den beiden Verformungskomponenten werden Längs- und Querkraft berechnet. Zusätzlich kann man mit nur einem Sensor die Radgeschwindigkeit bestimmt werden, in der gleichen Weise wie bei einem ABS-Sensor. Die von dem SWT-Sensor erfaßten rohen Sensorsignale werden gefiltert und verstärkt, bevor sie an eine zentrale Auswerte-Elektronikeinheit weitergeleitet werden. In der Auswerteeinheit werden die Phasendifferenz und die Signalamplitude ermittelt und mit Hilfe eines digitalen Signalprozessors daraus die Kraftkomponenten berechnet.
Die Kraftinformation wird dann an das Regelsystem weitergeleitet, wo mit Hilfe eines Fahrzeugmodells weitere zur Beschreibung der Fahrsituation wichtige Größen geschätzt werden (siehe unten).

Diese Reifen- oder auch Radkräfte können auch durch weitere bzw. andere geeignete Sensorik direkt oder indirekt über eine geeignete mathematische Umrechnung ermittelt werden, wie z.B. Kraftmeßfelgen, Reifen-Seitenwandtorsionssensoren, Oberflächensensoren, Zuspannkraft-/druck Bestimmung aus Ansteuersignalen des Bremsenaktuators über ein mathematisches Modell oder Zuspannkraft-/druck- Messung des Bremsenaktuators (Umfangskräfte), Federwegsensoren bzw. Drucksensoren bei Luftfedern oder Radlastmodell (vgl. Gleichung F4.9) aus Quer- und Längsbeschleunigungsinformation (Aufstandskräfte).

Allgemeine Beschreibung des Schätzverfahrens

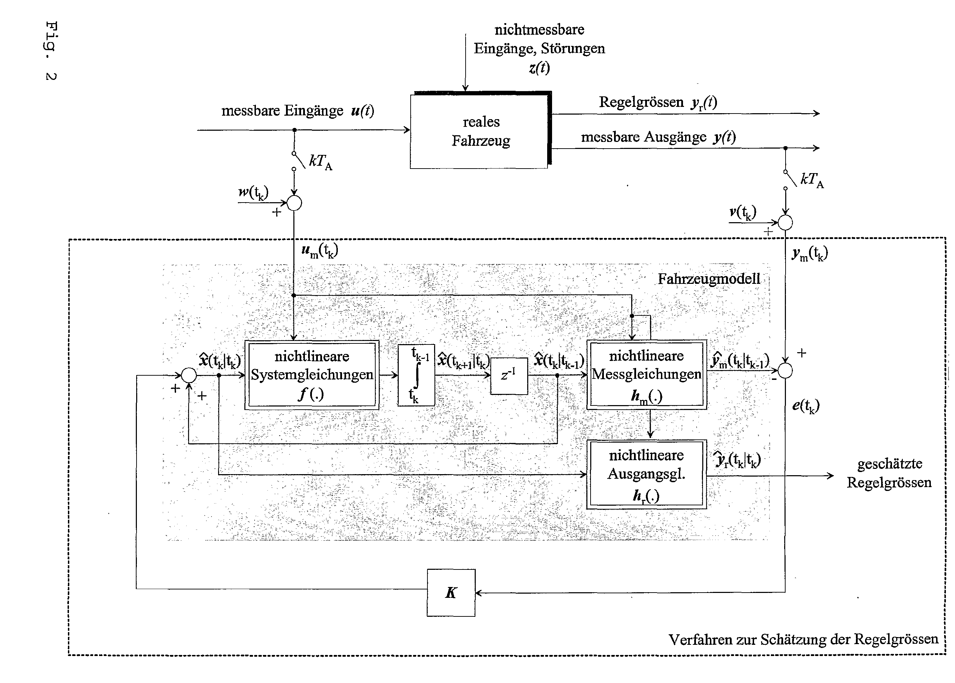

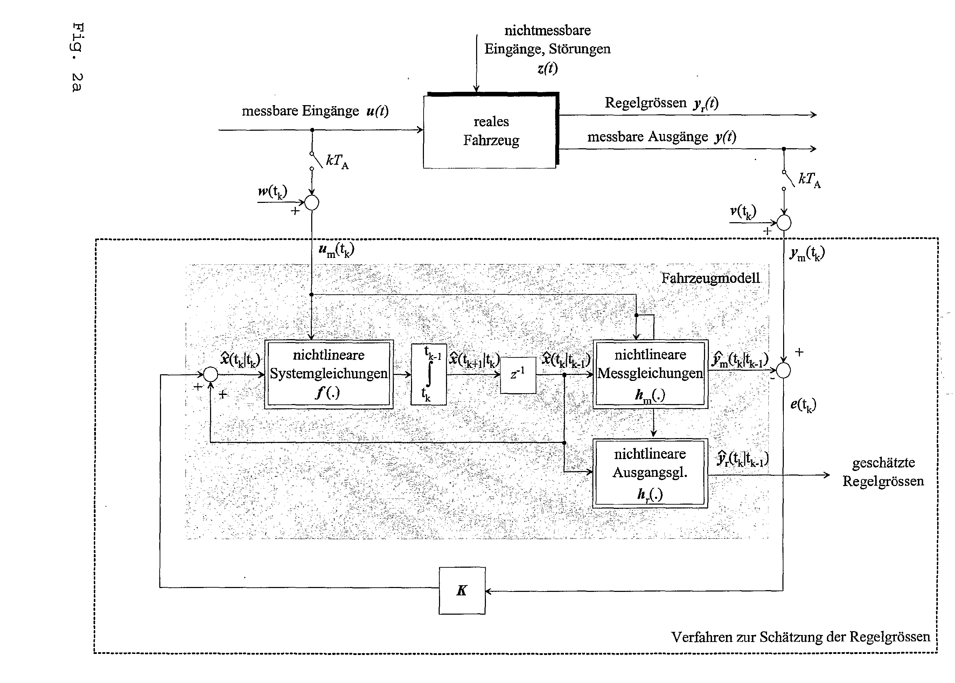

In Fig. 2 ist das allgemeine Blockschaltbild des Verfahrens zur Schätzung der Zustände des Fahrzeuges und der daraus abgeleiteten Regelgrößen dargestellt.

Auf das reale Fahrzeug wirken meßbare Eingänge **u** (z.B. Lenkwinkel), die sich durch gängige Sensoren ermitteln lassen, und nichtmeßbare bzw. nur mit hohem Aufwand meßbare Eingänge z (z.B. Seitenwind). Die Ausgänge des Fahrzeuges, die die Reaktion des Fahrzeuges auf die Eingänge beschreiben, sind unterteilt in die messbaren Ausgänge **y** (z.B. Reifenquerkräfte) und die Regelgrößen **y**$_r$ (z.B. Gierrate, Schwimmwinkel, Schräglaufwinkel, Wankwinkel), die für die Regelung der Fahrdynamik benötigt werden.

Zusätzlich zu den Reifen- oder Radkräften können weitere Meßgrößen zur Verbesserung der Schätzung in das Verfahren integriert werden. Diese Meßgrößen können z.B. Quer-, Längsbeschleunigung, Raddrehzahlen, Gierrate, Wankrate und/oder Nickrate sein. Die meßbaren Ausgänge **y** und die Regelgrößen **y**$_r$ können je nach Sensorausstattung in einzelnen Größen übereinstimmen, z.B. bei der Verwendung eines Gierratensensors und einer kombinierten Gierraten-/ Schwimmwinkelregelung. Die Gierrate ist in diesem Fall sowohl ein meßbarer Ausgang als auch eine Regelgröße.

Mit dem Verfahren zur Schätzung der Größen der Fahrdynamik ist es nun unter Kenntnis der - entsprechend der Sensorausstattung - meßbaren Ein- und Ausgänge des realen Fahrzeuges möglich, Regelgrößen mit einer für eine Regelung der Fahrdynamik ausreichenden Genauigkeit zu schätzen. Das Schätzverfahren soll möglichst unempfindlich gegen die nichtmeßbaren Eingänge und Modellierungsfehler sein. Dies kann mit dem im Folgenden vorgestellten Verfahren erreicht werden.

Ein nichtlineares Modell des Fahrzeuges (Fig. 2 und 2a, grau hinterlegt) ist die Grundlage des Schätzverfahrens. Mittels der kontinuierlichen, nichtlinearen Systemgleichungen $f(\hat{x}(t), u(t))$ des Fahrzeuges (Differentialgleichungssystem 1.Ordnung) können die geschätzten Fahrzustandsgrößen bzw. Größen der Fahrdynamik $\hat{x}$ bestimmt werden. Aus diesen Fahrzustandsgrößen bzw. Größen der Fahrdynamik werden über die diskreten, nichtlinearen Ausgangsgleichungen $h_r(\hat{x}(t_k|t_k), u_m(t_k))$ oder $h_r(\hat{x}(t_k|t_{k-1}), u_m(t_k))$ die geschätzten Regelgrößen $\hat{y}_r(t_k|t_k)$ oder $\hat{y}_r(t_k|t_{k-1})$ berechnet. In den Gleichungen für das Fahrzeugmodell ist auch ein nichtlineares Reifenmodell zur Bestimmung der Reifenkräfte aus den Fahrzeugzuständen enthalten.

Durch einen Vergleich der gemessenen Ausgangsgrößen **y**$_m(t_k)$ (z.B. Querkräfte der Reifen) mit den geschätzten Meßgrößen $\hat{y}_m(t_k|t_{k-1})$ die mittels den diskreten, nichtlinearen Meßgleichungen $h_m(x(t_k|t_{k-1}), u_m(t_k))$ aus den geschätzten Fahrzustandsgrößen $\hat{x}$ berechnet werden, wird ein Fehlersignals **e**$(t_k)$ gebildet. Mit der Rückführung dieses Fehlersignals **e**$(t_k)$ über eine Verstärkungsmatrix **K** werden die Zustandsgrößen $\hat{x}$ des nichtlinearen Fahrzeugmodells korrigiert. Durch diese Rückführung der Meßgrößen wird das Modell nachgeführt und die Schätzung verbessert.

Die zur Verfügung stehenden Meßgrößen (Sensorausstattung) und die Güte der Sensorsignale beeinflussen damit die Güte der Schätzung. Werden z.B. zusätzlich zu den Reifenkräften weitere Meßgrößen in die Schätzung einbezogen, so führt dies durch die Verknüpfung über das Fahrzeugmodell zu einer Verbesserung der Schätzung der Regelgrößen. Damit ist es z.B. möglich eine Gierrate höherer Genauigkeit zu schätzen, obwohl der eingesetzte Gierratensensor gegenüber dem heutigen System in der Güte reduziert sein kann. Alternativ ist es denkbar bei Einsatz von weiteren Meßgrößen hoher Güte (z.B. heutiger Gierratensensor und Querbeschleunigungssensor), Reifen- oder Radkraftsignale geringerer Güte zu verwenden oder bei Tolerieren einer geringeren Schätzgenauigkeit auf die Rückkopplung der Reifen- oder Radquerkräfte zu verzichten.

Weiterhin kann durch die Rückführung des Fehlersignals auch bei einem, bedingt durch den Arbeitspunkt, instabilen Fahrzeugmodell die Schätzung stabilisiert werden. Ein Weglaufen der Schätzung aufgrund eines Sensoroffsets, wie dies z.B. bei einer freien Integration möglich ist, tritt somit nicht auf. Das Verfahren bietet weiterhin die Möglichkeit auf das Fahrzeug einwirkende Kräfte und Momente (nichtmeßbare Eingänge) zu schätzen. Transformiert auf den Schwerpunkt sind beispielhaft für die Querdynamik die Störkraft $F_d$ und das Störmoment $T_d$ in Fig. 1 eingezeichnet. In dem Ausführungsbeispiel wird auf die Schätzung einer Störgröße näher eingegangen.

Beschreibung der Schätzgleichungen (vgl. Fig. 2 und 2a)

Die meßbaren Eingänge **u** und die meßbaren Ausgänge **y** des realen Fahrzeuges werden durch die Meßwerterfassung des digitalen Regelungsrechners (z.B. des Fahrdynamikreglers) zu diskreten Zeitpunkten $t_k$ mit der Abtastzeit $T_A$ erfasst. Additiv sind die Eingangsstörungen **w**$(t_k)$ und Ausgangsstörungen **v**$(t_k)$ wie z.B. Sensorrauschen oder Quantisierungseffekte des A/D-Wandlers überlagert. Die erfaßten, diskreten Meßgrößen[1] **u**$_m(t_k)$ und **y**$_m(t_k)$ werden für das Verfahren zur Schätzung der Regelgrößen verwendet.

[1]Nomenklatur der zeitlichen Zusammenhänge:

$\mathbf{x}(t_k)$      Signal zum diskreten Zeitpunkt $t_k$ .(aktueller Zeitpunkt)

$\hat{\mathbf{x}}(t_k|t_{k-1})$      geschätztes Signal zum Zeitpunkt $t_k$, wobei nur Informationen vom letzten Zeitpunkt $t_{k-1}$ verwendet sind.

$\hat{\mathbf{x}}(t_k|t_k)$      geschätztes Signal zum Zeitpunkt $t_k$, wobei Informationen vom aktuellen

Zu jedem Abtastschritt werden die geschätzten Meßgrößen $\hat{\mathbf{y}}_m(\mathbf{t}_k|\mathbf{t}_{k\text{-}1})$ aus den vorhergesagten Zuständen $\hat{\mathbf{x}}(\mathbf{t}_k|\mathbf{t}_{k\text{-}1})$ und den Eingängen $\mathbf{u}_m(\mathbf{t}_k)$ mittels der diskreten, nichtlinearen Meßgleichung $\mathbf{h}_m(.)$ berechnet (F3.1). Das Fehlersignal $\mathbf{e}(\mathbf{t}_k)$ zwischen gemessenen und geschätzten Messgrößen (F3.2) führt mit der Verstärkungsmatrix K zu einer Korrektur der vorhergesagten Zustände (F3.3). Mit den korrigierten Zuständen $\hat{\mathbf{x}}(\mathbf{t}_k|\mathbf{t}_k)$ oder den Zuständen vom letzten Zeitpunkt $\hat{\mathbf{x}}(\mathbf{t}_k/\mathbf{k}_{\text{-}1})$erfolgt die Bestimmung der geschätzten Regelgrößen $\hat{\mathbf{y}}_r(\mathbf{t}_k|\mathbf{t}_k)$ oder $\hat{\mathbf{y}}_r(\mathbf{t}_k|\mathbf{t}_{k\text{-}1})$ mittels der diskreten, nichtlinearen Ausgangsgleichung $\mathbf{h}_r(.)$ (F3.4.1 oder F3.4.2) . Die Vorhersage der Zustände $\hat{\mathbf{x}}(\mathbf{t}_{k+1}|\mathbf{t}_k)$ für den nächsten Abtastzeitpunkt $\mathbf{t}_{k+1}$ erfolgt nach Gleichung F3.5 durch Integration der nichtlinearen, kontinuierlichen Systemgleichungen $\mathbf{f}(.)$ mit der Anfangsbedingung $\hat{\mathbf{x}}(\mathbf{t}_k|\mathbf{t}_k)$.

$$\text{F3.1} \qquad\qquad \hat{\mathbf{y}}_m(\mathrm{t}_k|\mathrm{t}_{k-1}) = \mathbf{h}_m(\hat{\mathbf{x}}(\mathrm{t}_k|\mathrm{t}_{k-1}), \mathbf{u}_m(\mathrm{t}_k))$$

$$\text{F3.2} \qquad\qquad \mathbf{e}(t_k) = \mathbf{y}_m(t_k) - \hat{\mathbf{y}}_m(t_k|t_{k-1})$$

$$\text{F3.3} \qquad\qquad \hat{\mathbf{x}}(t_k|t_k) = \hat{\mathbf{x}}(t_k|t_{k-1}) + \mathbf{K}(t_k)\,\mathbf{e}(t_k)$$

$$\text{F3.4.1} \qquad\qquad \hat{\mathbf{y}}_r(\mathrm{t}_k|\mathrm{t}_k) = \mathbf{h}_r(\hat{\mathbf{x}}(\mathrm{t}_k|\mathrm{t}_k), \mathbf{u}_m(\mathrm{t}_k))$$

$$\text{F3.4.2} \qquad\qquad \hat{\mathbf{y}}_r(\mathrm{t}_k|\mathrm{t}_{k-1}) = \mathbf{h}_r(\hat{\mathbf{x}}(\mathrm{t}_k|\mathrm{t}_{k-1}), \mathbf{u}_m(\mathrm{t}_k))$$

$$\text{F3.5} \qquad\qquad \hat{\mathbf{x}}(t_{k+1}|t_k) = \hat{\mathbf{x}}(t_k|t_k) + \int_{t_k}^{t_{k+1}} \mathbf{f}(\hat{\mathbf{x}}(t), \mathbf{u}(t))\, dt$$

mit

| | |
|---|---|
| $t_k$ | diskreter Zeitpunkt |
| $\mathbf{u}_m$ | Eingangsvektor der messbaren Eingänge |
| $\mathbf{y}_m$ | Ausgangsvektor der messbaren Ausgänge |
| $\hat{\mathbf{y}}_m$ | geschätzter Ausgangsvektor der messbaren Ausgänge |
| $\hat{\mathbf{y}}_r$ | geschätzter Ausgangsvektor der Regelgrößen |
| x | Zustandsvektor, geschätzt |
| $\mathbf{h}_m(.)$ | diskrete, nichtlineare Messgleichungen |
| $\mathbf{h}_r(.)$ | diskrete, nichtlineare Ausgangsgleichungen |
| $\mathbf{f}(.)$ | kontinuierliche, nichtlineare Systemgleichungen (z.B. Querdynamik incl. Reifenmodell, Wankdynamik) |
| $e$ | Residuen, Differenz zwischen gemessenen und geschätzten Ausgängen |
| K | (zeit-,arbeitspunktabhängige) Verstärkungsmatrix |

Zeitpunkt $\mathbf{t}_k$ verwendet sind.

$\hat{\mathbf{x}}(\mathbf{t}_{k+1}|\mathbf{t}_k)$   vorhergesagtes Signal für den nächsten Zeitpunkt $\mathbf{t}_{k+1}$, wobei nur Informationen vom aktuellen Zeitpunkt $t_k$ verwendet sind.

Die diskretisierte Form der Integration nach Gleichung F3.5 kann z.B. durch einen einfachen Euler-Ansatz realisiert werden.

$$\text{F3.6} \qquad\qquad \hat{\mathbf{x}}(t_{k+1}|t_k) = \hat{\mathbf{x}}(t_k|t_k) + T_A\,\mathbf{f}(\hat{\mathbf{x}}(t_k|t_k), \mathbf{u}(t_k))$$

Bestimmung der Rückführverstärkungsmatrix K

Die Rückführverstärkungsmatrix K kann zu jedem Zeitpunkt $t_k$ nach Gleichung F3.7 in Abhängigkeit von zwei Kriterien

- G: Informationsgehalt der gemessenen Signale und

- $\hat{\mathbf{A}}$: geschätzter Arbeitspunkt des nichtlinearen Fahrzeugmodells

bestimmt werden.

$$F3.7 \qquad \mathbf{K}(t_k) = f(\hat{\mathbf{A}}, \mathbf{G})$$

Der Informationsgehalt eines Sensorsignales ist z.B. bestimmt durch die Güte des Sensors (Genauigkeit, Rauschen, -Drift), den Einbauort (überlagerte Schwingungen, Koordinatendrehungen) und den Modellierungsfehler des Fahrzeugmodells, d.h. wie gut 'paßt' die gemessene Größe zum mathematischen Ansatz. Die Elemente der Rückführverstärkungsmatrix K werden so gewählt, dass jeder gemessene Ausgang entsprechend seines Informationsgehaltes optimal für die Korrektur der geschätzten Fahrzeugzustände genutzt wird. So hat z.B. ein Sensorsignal geringer Güte auch einen geringen Einfluß auf die Schätzung der Regelgrößen. Wenn der Informationsgehalt sich zeitlich nicht ändert, dann ergibt sich daraus auch keine zeitliche Änderung von K. Es ist aber auch denkbar, eine festgestellte Änderung eines Sensorsignales (z.B. Ausfall, erhöhtes Rauschen) entsprechend in der Rückführverstärkungsmatrix anzupassen.

Das dynamische Verhalten des Fahrzeuges ist stark vom Fahrzustand abhängig. In der regelungstechnischen Beschreibung bedeutet dies, dass die Eigenwerte der das Fahrzeug beschreibenden Differentialgleichung in weiten Bereichen in Abhängigkeit von z.B. der Fahrzeuggeschwindigkeit und den arbeitspunktabhängigen Schräglaufsteifigkeiten der Reifen variieren (Steigung der Reifenquerkraftkennlinie, Fig.5). Um eine optimale Schätzung zu erreichen, ist es sinnvoll, die Rückführverstärkungsmatrix K an den Arbeitspunkt, d.h. geschätzte Zustände, gemessene/geschätzte Ausgänge und/oder Regelgrößen anzupassen. Dies kann zu jedem Abtastschritt oder in definierten Arbeitsbereichen geschehen (z.B. Sättigung / keine Sättigung der Reifenkennlinie, hohe/niedrige Geschwindigkeit).

3.2 Reglerstruktur der Fahrdynamikregelung

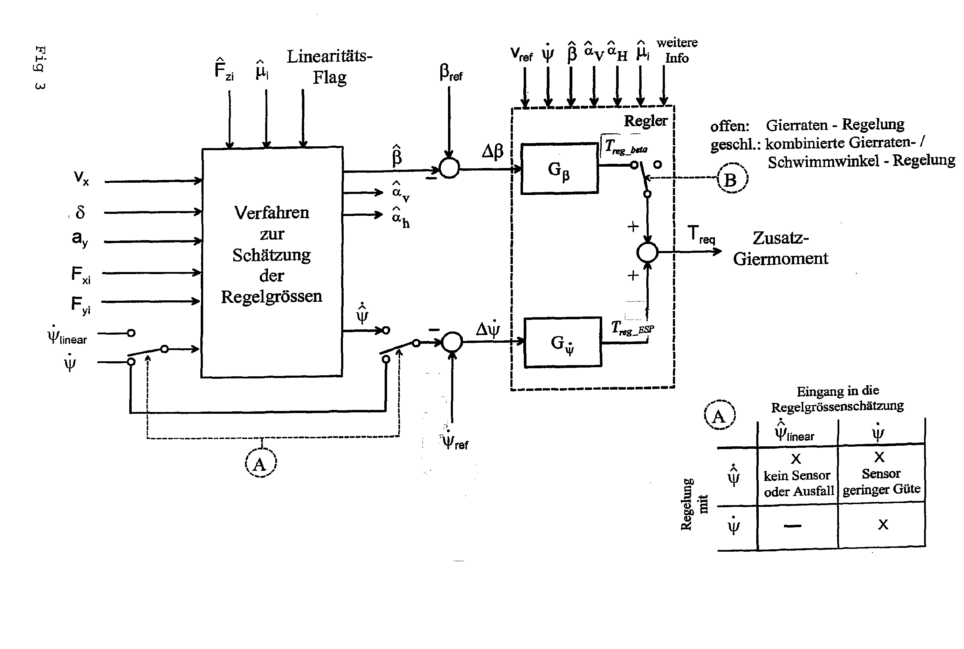

Für eine Regelung der Querdynamik des Fahrzeuges werden die Regelgrößen Schwimmwinkel und Gierrate benötigt. In Fig. 3 ist die allgemeine Struktur der vorgeschlagenen Querdynamikregelung (Giermomentenregelung) basierend auf den geschätzten Regelgrößen Schwimmwinkel $\hat{\beta}$ und Gierrate $\hat{\dot{\psi}}$ dargestellt. Falls ein Gierratensensor hoher Güte verwendet wird kann auch anstelle der geschätzten Gierrate die gemessene Gierrate $\dot{\psi}$ für die Regelung verwendet werden.

Die Schätzung der Regelgrößen Schwimmwinkel $\hat{\beta}$ und Gierrate $\hat{\dot{\psi}}$ erfolgt nach dem Verfahren beschrieben in Abschnitt 3.1 und 4.1. Größen, die für die Schätzung verwendet werden (vgl. Fig. 3), sind die Eingänge $\mathbf{u}_m$ : Fahrzeuggeschwindigkeit $V_x$, Lenkwinkel $\delta$, Reifen- oder Radlängskräfte $F_{xi}$ und die Messgrößen $\mathbf{y}_m$ : Querbeschleunigung $a_y$, die Reifen- oder Radquerkräfte $F_{yi}$ und Gierrate $\dot{\psi}$ Alternativ zur Gierrate $\dot{\psi}$ kann auch das Ersatzsignal $\dot{\psi}_{linear}$ in Verbindung mit dem Linearitäts-Flag verwendet werden. Weitere außerhalb des Schätzverfahrens bestimmte Eingangsgrößen, die durch geeignete Sensorik gemessen oder aus anderen Informationen berechnet oder geschätzt sind, sind die Aufstandskräfte $\hat{F}_{zi}$ jedes Rades und die Reibungs-Koeffizienten $\hat{\mu}_i$ für den Reifen-Fahrbahn Kontakt.

Basierend auf der Sensorkonfiguration sind in Fig.3 (Tabelle A,B) die sinnvollen Schätz-/Reglerstrukturen dargestellt:

- Regelung mit der geschätzten Gierrate $\hat{\dot{\psi}}$

Für die Bildung der Regeldifferenz $\Delta\dot{\psi}$ wird die geschätzte Gierrate $\hat{\dot{\psi}}$ verwendet. Der Gierratensensor kann aus Kostengründen eingespart oder in seiner Güte reduziert werden.

- Eingang in die Regelgrößenschätzung ist ein Signal von einem Gierratensensor geringerer Güte (geringere Genauigkeit, Offsetdrift). Die geschätzte Gierrate hat aufgrund der Nutzung der Informationen anderer Eingangs- und Meßgrößen eine höhere Güte als die gemessene Gierrate.

- Wird kein Gierratensensor eingesetzt oder der Sensor ist ausgefallen, kann zur Verbesserung der Regelgrößenschätzung das berechnete Ersatzsignal $\dot{\psi}_{linear}$ in Verbindung mit dem Linearitäts-Flag verwendet werden. Dieses Ersatzsignal, bekannt aus dem heutigen ESP-System zur Überwachung des Gierratensensors, wird gebildet aus den

Differenzraddrehzahlen einer Achse oder dem stationären Lenkmodell oder aus der Querbeschleunigung. Dieses Ersatzsignal ist allerdings nur im linearen Arbeitsbereich der Fahrzeugdynamik gültig. In Abhängigkeit des Linearitäts-Flags, das diesen Gültigkeitsbereich anzeigt, entfällt die Rückführung für das Fehlersignal zwischen gemessener und geschätzter Gierrate $e_{\dot\psi} = \dot\psi_{linear} - \dot{\hat\psi}$ auf die geschätzten Zustände $\hat{\mathbf{x}}(t_k)$ (s . Fig. 2). Die entsprechenden Elemente der Rückführmatrix $K$ können dann z.B. auf Null gesetzt werden.

- Regelung mit der gemessenen Gierrate $\dot\psi$

  Diese Konfiguration ist sinnvoll, wenn ein Sensor heutiger Güte aus dem Standard-ESP System eingesetzt wird. Die gemessene Gierrate wird zwar in die Regelgrößenschätzung zur Verbesserung des geschätzten Schwimmwinkels einbezogen, für die Bildung der Regeldifferenz $\Delta\dot\psi$ kann die gemessene Größe anstelle der geschätzten verwendet werden. Wird der geschätzte Schwimmwinkel nicht zur Regelung verwendet, erhält man die aus der Serie bekannte Reglerstruktur.

  Bei dieser Konfiguration ist es denkbar, bei einer tolerierbaren Reduzierung der Güte des geschätzten Schwimmwinkels auf die Reifen- oder Radquerkräfte $F_{yi}$ als Meßgröße zu verzichten. Dies ist besonders geeignet für Brakeby-Wire Systeme, die es ermöglichen ohne zusätzliche Sensorik die Reifenlängskräfte bei Betätigung des Bremsenaktuators zu ermitteln.

Die kombinierte Gierraten-/Schwimmwinkelregelung (Schalter B) läßt sich mit allen Gierraten-Konfigurationen (Tabelle A, Fig. 3) realisieren und ist gegenüber der reinen Gierraten-Regelung vorzuziehen.

Der Giermomenten-Regler besteht aus einem nichtlinearen, dynamischen Regler $G_b$, der als Eingang die Regeldifferenz Db zwischen geschätztem Schwimmwinkel $\hat\beta$ und Referenz-Schwimmwinkel $b_{ref}$ erhält und einem nichtlinearen, dynamischen Regler $G_{\dot\psi}$, der als Eingang die Regeldifferenz $\Delta\dot\psi$ zwischen gemessener/geschätzter Gierrate und Referenz-Gierrate $\dot\psi_{ref}$ erhält. Statt oder in Verbindung mit dem Fahrzeug-Schwimmwinkel $\beta$ können auch die geschätztem Reifen-Schräglaufwinkel $\hat\alpha_V$, $\hat\alpha_H$ von Vorder- und Hinterachse als Regelgröße verwendet werden. Die beiden Ausgangsgrößen der Regler werden zu einem Zusatz-Giermoment $T_{req}$ addiert, das anschließend (in Fig. 3 nicht dargestellt) als Bremskraftanforderung auf die Räder verteilt wird.

Der Referenzwert $\dot\psi_{ref}$ für die Gierrate wird wie beim Standard-ESP aus einem dynamischen Einspurmodell erzeugt. Der Referenzwert $\beta_{ref}$ für den Schwimmwinkel kann ebenso durch ein dynamisches Modell erzeugt werden. Im normalen Betriebsbereich des Fahrzeuges ist jedoch der Schwimmwinkel klein (<2°), so dass eine Aktivierungsschwelle als $\beta_{ref}$ ausreicht. Eine Vorgabe aus einem dynamischen Modell ist nicht notwendig.

Die Parameter bzw. Aktivierungsschwellen des nichtlinearen, dynamischen Reglers werden u.a. in Abhängigkeit von der Geschwindigkeit $V_x$, der Gierrate $\dot\psi$ bzw. $\dot{\hat\psi}$, der geschätzten Schwimm- und Schräglaufwinkel $\hat\beta, \hat\alpha_V, \hat\alpha_H$ und des Reibwertes an den jeweiligen Fahrzustand angepasst. Im Ausführungsbeispiel (Abschnitt 4.2) wird die Generierung des Schwimmwinkel-Referenzwertes und die Anpassung des Schwimmwinkelreglers $G_b$ beschrieben.

Bevorzugte Ausführungsform aufgrund einer im Vergleich zu dem bekannten ESP-System deutlich verbesserter Performance, ist die kombinierte Gierraten-/Schwimmwinkelregelung unter Verwendung eines Gierratensensors gleicher oder gegenüber heutiger Sensoren reduzierten Güte (rechte Spalte, Tabelle A, Fig. 3).

Die kombinierte Gierraten-/Schwimmwinkelregelung führt zu einer Verbesserung des Standard-ESP insbesondere durch:

- Stabilisierung des Fahrzeugs in Situationen in denen das Standard-ESP nicht eingreift, wie z.B. Kreisfahrt mit Lastwechsel

- Entlastung des Fahrers durch reduzierten Lenkaufwand zur Fahrzeugstabilisierung, z.B. beim Spurwechsel

4. Ausführungsbeispiel

Das folgende Ausführungsbeispiel beschreibt eine bevorzugte Ausführungsform der Erfindung bestehend aus der Schätzung der Querdynamikzustände Gierrate und Schwimmwinkel und der darauf aufbauenden kombinierten Gierraten-/Schwimmwinkel Regelung. Ein Gierratensensorsignal steht für die Schätzung und Regelung zur Verfügung.

4.1 Schätzung der Regelgrößen Gierrate und Schwimmwinkel

Die Grundlage für die Schätzung von Gierrate und Schwimmwinkel ist ein ebenes Zweispurmodell für die Querdynamikbewegung unter Vernachlässigung von Wank- und Nickdynamik. Der Einfluß von Wanken und Nicken wird durch den Einfluß der Radaufstandskraft im Reifenmodell berücksichtigt.

Die Schätzung der Regelgrößen erfolgt nach den Gleichungen 3.1 bis 3.4 und 3.6. Die Eingangs-, Ausgangs-, und Zustandsgrößen des zugrundegelegten Fahrzeugmodells sind:

$$\mathbf{u} = [V_x, \delta, \mathbf{F}_x, \hat{\mathbf{F}}_z, \hat{\mu}_i]^T \qquad \text{meßbare Eingänge}$$

$$\hat{\mathbf{y}} = [\hat{\mathbf{F}}_y, \hat{a}_y, \dot{\hat{\psi}}]^T \qquad \text{geschätzte meßbare Ausgänge}$$

F4.1 $$\hat{\mathbf{x}} = [\hat{V}_y, \dot{\hat{\psi}}, \hat{F}_d]^T \qquad \text{geschätzte Zustände des}$$

Fahrzeuges

$$\hat{\mathbf{y}}_r = [\hat{\beta}, \hat{\alpha}_v, \hat{\alpha}_h, \dot{\hat{\psi}}]^T \qquad \text{geschätzte Regelgrößen}$$

$$\mathbf{y}_m = [\mathbf{F}_y, a_y, \dot{\psi}]^T \qquad \text{meßbare Ausgänge}$$

Die messbaren Eingänge u sind die Fahrzeuglängsgeschwindigkeit $V_x$, die eine im Standard-ESP aus den Raddrehzahlen geschätzte Größe ist, der Lenkwinkel $\delta$, die vier Reifen- oder Radlängskräfte $\mathbf{F}_x$, die vier Aufstandskräfte $\hat{F}_z$, berechnet nach Gleichung F4.9 und die vier Reibungs-Koeffizienten $\hat{\mu}_i$ für den Reifen-Fahrbahn Kontakt. Die Reibungskoeffizienten können z.B. entweder vom geschätzten Reibwert des Standard ESP übernommen, oder durch einen speziellen Schätzalgorithmus z.B. aus den Reifenkräften oder daraus abgeleiteter Größen, paarweise oder radweise bestimmt werden.

Die Ausgänge $y_m$ bzw. $\hat{y}$ sind die vier Reifen- oder Radquerkräfte $\mathbf{F}_y$, die Querbeschleunigung $a_y$ vorzugsweise im Schwerpunkt oder in der Sensorposition und die Gierrate $\dot{\psi}$. Die geschätzten Regelgrößen $\hat{y}_r$ sind der Schwimmwinkel $\hat{\beta}$, die Schräglaufwinkel der Reifen für Vorder und Hinterachse $\hat{\alpha}_v, \hat{\alpha}_h$ und die Gierrate $\dot{\hat{\psi}}$.

Die geschätzten Zustände $\hat{x}$ sind die Fahrzeugquergeschwindigkeit $\hat{V}_y$, die Gierrate $\dot{\hat{\psi}}$, und die Störkraft $\hat{F}_d$ (vgl. Fig.1), die als nicht meßbarer Eingang (z.B. Windkraft, Stoß) geschätzt werden soll. Um die Störgröße zu schätzen wird sie als Zustand $x_3$ interpretiert, und in den Zustandsvektor x aufgenommen. Diese Vorgehensweise ist äquivalent für weitere Störgrößen wie das Störmoment $T_d$ und/oder auch unbekannte oder sich verändernde Parameter (Masse des Fahrzeuges, Reibungskoeffizienten Reifen/Fahrbahn) denkbar.

Nach Gleichung F3.1 werden die geschätzten, meßbaren Ausgänge $\hat{y}_m(t_k|t_{k-1})h_m(\hat{x}(t_k|t_{k-1}),u_m(t_k))$ aus der nichtlinearen Meßgleichung bestimmt:

$$\hat{y}_{m1} = \hat{\mathbf{F}}_{y\_vl}(t_k | t_{k-1})$$

$$\hat{y}_{m2} = \hat{\mathbf{F}}_{y\_vr}(t_k | t_{k-1})$$

$$\hat{y}_{m3} = \hat{\mathbf{F}}_{y\_hr}(t_k | t_{k-1})$$

F4.2 $$\hat{y}_{m4} = \hat{\mathbf{F}}_{y\_hl}(t_k | t_{k-1})$$

$$\hat{y}_{m5} = \hat{a}_y(t_k | t_{k-1}) = \frac{1}{m}((F_{x\_vr} + F_{x\_vl}) * \sin\delta + (\hat{F}_{y\_vl} + \hat{F}_{y\_vr}) * \cos\delta$$

$$+ (\hat{F}_{y\_hl} + \hat{F}_{y\_hr}) + \hat{F}_d)$$

$$\hat{y}_{m6} = \dot{\hat{\psi}}(t_k | t_{k-1})$$

mit den Reifenquerkräften aus dem nichtlinearen Reifenmodell

$$\hat{\mathbf{F}}_{y\_vl}(t_k|t_{k-1}) = f(\hat{\alpha}_v(t_k|t_{k-1}), F_{x\_vl}(t_k), \hat{F}_{z\_vl}(t_k), \hat{\mu}_{vl}(t_k))$$

$$\hat{\mathbf{F}}_{y\_vr}(t_k|t_{k-1}) = f(\hat{\alpha}_v(t_k|t_{k-1}), F_{x\_vr}(t_k), \hat{F}_{z\_vr}(t_k), \hat{\mu}_{vr}(t_k))$$

F4.3

$$\hat{\mathbf{F}}_{y\_hr}(t_k|t_{k-1}) = f(\hat{\alpha}_h(t_k|t_{k-1}), F_{x\_hr}(t_k), \hat{F}_{z\_hr}(t_k), \hat{\mu}_{hr}(t_k))$$

$$\hat{\mathbf{F}}_{y\_hl}(t_k|t_{k-1}) = f(\hat{\alpha}_h(t_k|t_{k-1}), F_{x\_hl}(t_k), \hat{F}_{z\_hl}(t_k), \hat{\mu}_{hl}(t_k))$$

und den Schräglaufwinkeln

F4.4

$$\hat{\alpha}_v(t_k|t_{k-1}) = -\delta(t_k) + \frac{\hat{V}_y(t_k|t_{k-1})}{V_x(t_k)} + \frac{l_v\dot{\hat{\psi}}(t_k|t_{k-1})}{V_x(t_k)}$$

$$\hat{\alpha}_h(t_k|t_{k-1}) = \frac{\hat{V}_y(t_k|t_{k-1})}{V_x(t_k)} - \frac{l_h\dot{\hat{\psi}}(t_k|t_{k-1})}{V_x(t_k)}$$

Das Reifenmodell nach Gleichung F4.3 bildet die nichtlineare Charakteristik der Reifenquerkraftkennlinie ab, wie sie in Fig. 5 prinzipiell in Abhängigkeit der wesentlichen Einflußgrößen dargestellt ist. Diese Kennlinie kann tabellarisch abgelegt, oder vorzugsweise analytisch in Form z.B. eines approximierten Polynoms dargestellt werden.

Nach Vergleich der geschätzten mit den gemessenen Ausgängen (F3.2) und der Korrektur der Zustände (F3.3) können mit den aktualisierten Zuständen nach Gleichung F3.4. die geschätzten Regelgrößen $\hat{\mathbf{y}}_r(\mathbf{t}_k|\mathbf{t}_k) = \mathbf{h}_r(\hat{\mathbf{x}}(\mathbf{t}_k|\mathbf{t}_k), \mathbf{u}_m(\mathbf{t}_k))$ mittels der nichtlinearen Ausgangsgleichung bestimmt werden.

F4.5

$$\hat{y}_{r1} = \hat{\beta}(t_k|t_k) = \frac{\hat{V}_y(t_k|t_k)}{V_x(t_k)}$$

$$\hat{y}_{r2} = \hat{\alpha}_v(t_k|t_k)$$

$$\hat{y}_{r3} = \hat{\alpha}_h(t_k|t_k)$$

$$\hat{y}_{r4} = \dot{\hat{\psi}}(t_k|t_k)$$

mit den geschätzten Reifen-Schräglaufwinkeln:

F4.6

$$\hat{\alpha}_v(t_k|t_k) = -\delta(t_k) + \frac{\hat{V}_y(t_k|t_k)}{V_x(t_k)} + \frac{l_v\dot{\hat{\psi}}(t_k|t_k)}{V_x(t_k)}$$

$$\hat{\alpha}_h(t_k|t_k) = \frac{\hat{V}_y(t_k|t_k)}{V_x(t_k)} - \frac{l_h\dot{\hat{\psi}}(t_k|t_k)}{V_x(t_k)}$$

Die geschätzte Regelgröße $\dot{\hat{\psi}}$ wird im anschließenden Ausführungsbeispiel für den Regler nicht benutzt, da ein Gierratensensor heutiger Güte zugrunde gelegt wird.

Die Schätzung der Zustände für den nächsten Abtastzeitpunkt erfolgt nach Gleichung F3.6 mittels der nichtlinearen Systemgleichungen: $\hat{\mathbf{x}}(t_k|t_k) = \mathbf{f}(\hat{\mathbf{x}}(t_k|t_k), \mathbf{u}(t_k))$

$$\dot{x}_1 = \dot{V}_y = -V_x\dot{\psi} + \frac{1}{m}((F_{x\_vr} + F_{x\_vl}) * \sin\delta + (\hat{F}_{y\_vl} + \hat{F}_{y\_vr}) * \cos\delta$$

$$+ (\hat{F}_{y\_hl} + \hat{F}_{y\_hr}) + \hat{F}_d)$$

$$\dot{x}_2 = \ddot{\psi} = \frac{1}{\Theta}((\hat{F}_{y\_vl} + \hat{F}_{y\_vr}) * l_v * \cos\delta + (F_{x\_vr} * b_{vr} - F_{x\_vl} * b_{vl}) * \cos\delta +$$

F4.7
$$+ (F_{x\_vl} + F_{x\_vr}) * l_v * \sin\delta + (\hat{F}_{y\_vl} * b_{vl} - \hat{F}_{y\_vr} * b_{vr}) * \sin\delta -$$

$$- (\hat{F}_{y\_hl} + \hat{F}_{y\_hr}) * l_h - F_{x\_hl} * b_{hl} + F_{x\_hr} * b_{hr})$$

$$\dot{x}_3 = \dot{\hat{F}}_d = 0$$

mit den geschätzten Reifenkräften aus dem Reifenmodell, wobei die Schräglaufwinkel aus Gleichung F4.6 verwendet werden.

$$\hat{F}_{y\_vl}(t_k|t_k) = f(\hat{\alpha}_v(t_k|t_k), F_{x\_vl}(t_k), \hat{F}_{z\_vl}(t_k), \hat{\mu}_{vl}(t_k))$$

$$\hat{F}_{y\_vr}(t_k|t_k) = f(\hat{\alpha}_v(t_k|t_k), F_{x\_vr}(t_k), \hat{F}_{z\_vr}(t_k), \hat{\mu}_{vr}(t_k))$$

F4.8
$$\hat{F}_{y\_hr}(t_k|t_k) = f(\hat{\alpha}_h(t_k|t_k), F_{x\_hr}(t_k), \hat{F}_{z\_hr}(t_k), \hat{\mu}_{hr}(t_k))$$

$$\hat{F}_{y\_hl}(t_k|t_k) = f(\hat{\alpha}_h(t_k|t_k), F_{x\_hl}(t_k), \hat{F}_{z\_hl}(t_k), \hat{\mu}_{hl}(t_k))$$

4.2 Kombinierte Gierraten- / Schwimmwinkelregelung

Im Folgenden wird ein Ausführungsbeispiel des Querdynamikreglers für die bevorzugte Ausführungsform Regelung mit gemessener Gierrate und geschätztem Schwimmwinkel beschrieben (vgl. Abschnitt 3.2 und Fig. 3). Der Übertragungspfad mit dem Regler $G_\psi$ für den Gierratenanteil ist aus dem Standard-ESP übernommen und wird hier nicht weiter dargestellt.

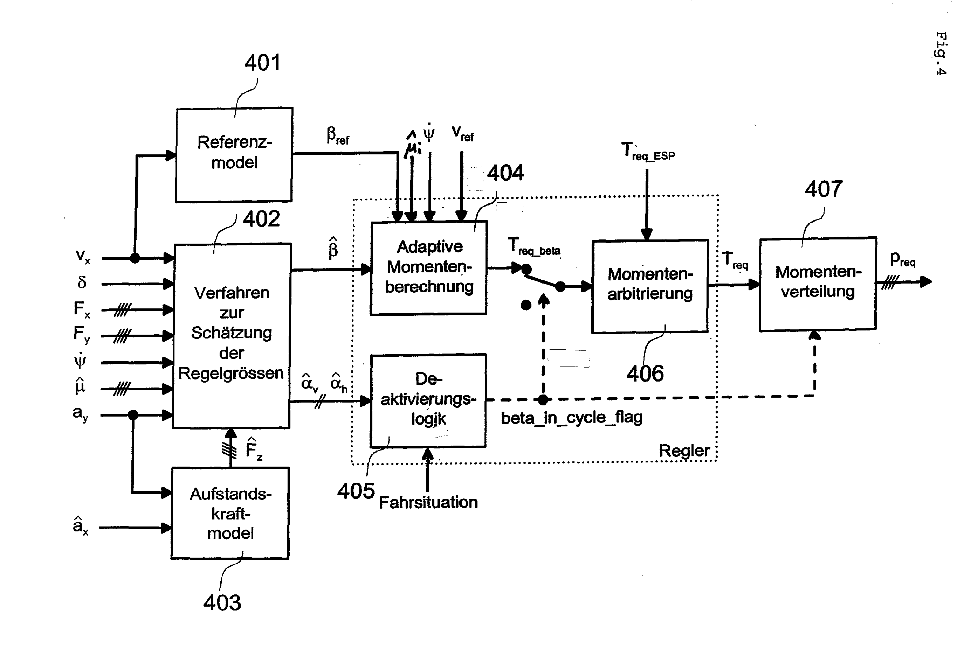

In Fig. 4 sind die wesentlichen Erweiterungen zum Standard-ESP durch den Schwimmwinkelregelungsanteil beschrieben.

Referenzmodell

Im Block 401 wird eine Schwimmwinkel-Referenzgröße abhängig von der Fahrzeuglängsgeschwindigkeit $V_x$ nach Gleichung (F4.8) bestimmt

F4.8

$$\beta_{ref} = \begin{cases} \beta_{0,ref} - kV_x & \text{für} & V_x < V_{Grenz} \\ \beta_{Grenz,ref} & \text{für} & V_x \geq V_{Grenz} \end{cases} \quad \text{für} \quad \hat{\beta} > 0$$

und

$$\beta_{ref} = \begin{cases} -\beta_{0,ref} + kV_x & \text{für} & V_x < V_{Grenz} \\ -\beta_{Grenz,ref} & \text{für} & V_x \geq V_{Grenz} \end{cases} \quad \text{für} \quad \hat{\beta} < 0$$

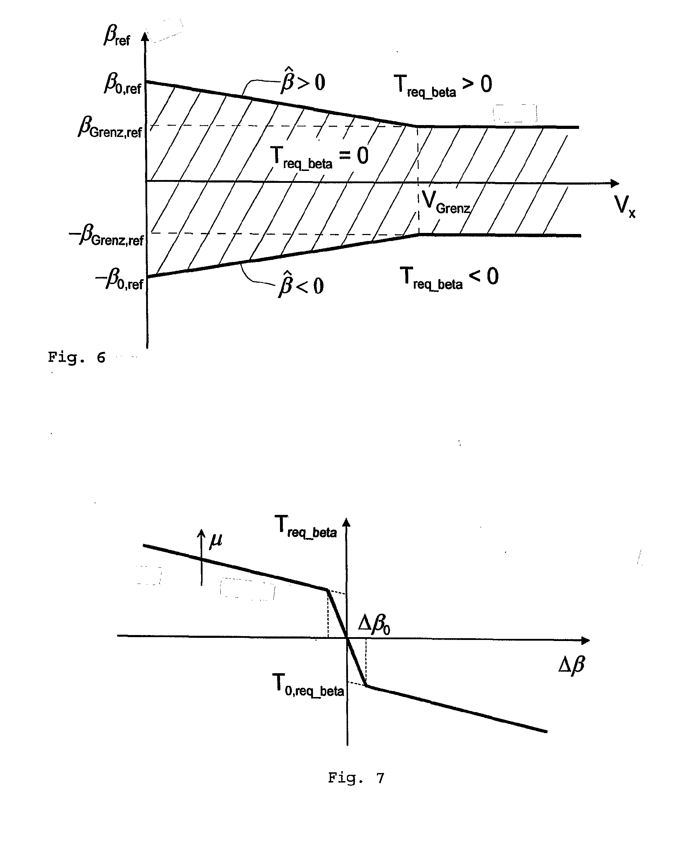

In Fig.6 ist die Kennlinie nach Gleichung F4.8 dargestellt. Das schraffierte Band markiert den Bereich kleiner Schwimmwinkel des Fahrzeuges, die ein Fahrer noch problemlos beherrschen kann. Innerhalb dieses Bereiches $|b| < |b_{ref}|$ ist kein Regeleingriff aufgrund zu großer Schwimmwinkel notwendig. In Abhängigkeit steigender Geschwindigkeit wird die Regeleintrittschwelle bis auf einen Grenzwert $b_{Grenz,ref}$ reduziert, da bei höherer Geschwindigkeit größere Schwimmwinkel für einen Fahrer schlechter beherrschbar sind.

Typische Werte für die Kennlinie der Regeleintrittsschwelle $b_{ref}$ sind:

$$b_{0,\text{ref}} = 7°, \quad b_{\text{Grenz,ref}} = 4°, \quad V_{\text{grenz}} = 80 \text{ km/h}$$

Aufstandskraftmodell

Zur Schätzung der Aufstandskräfte wird im Block 403 ein stationäres Modell nach Gleichung (F4.9) verwendet. Die Aufstandskräfte $F_z$ werden mit den im Schwerpunkt angreifenden Längs- und Querbeschleunigungen $a_x$ und $a_y$ geschätzt. Die Längsbeschleunigung kann sowohl eine durch einen Sensor gemessene Größe sein, als auch eine, z.B. im Standard-ESP aus den Raddrehzahlen, geschätzte Größe sein.

F4.9

$$\hat{F}_{z\_vl} = \frac{m}{l}\left(l_h g - h\hat{a}_x\right)\left(\frac{1}{2} - \frac{h}{b_v g}a_y\right)$$

$$\hat{F}_{z\_vr} = \frac{m}{l}\left(l_h g - h\hat{a}_x\right)\left(\frac{1}{2} + \frac{h}{b_v g}a_y\right)$$

$$\hat{F}_{z\_hl} = \frac{m}{l}\left(l_v g + h\hat{a}_x\right)\left(\frac{1}{2} - \frac{h}{b_h g}a_y\right)$$

$$\hat{F}_{z\_hr} = \frac{m}{l}\left(l_v g + h\hat{a}_x\right)\left(\frac{1}{2} + \frac{h}{b_h g}a_y\right)$$

$$l = l_v + l_h$$
$$b_v = b_{vl} + b_{vr}$$
$$b_h = b_{hl} + b_{hr}$$

Adaptive Momentenberechnung

Im Block 404 wird aus der Schwimmwinkeldifferenz

F4.10

$$\Delta\beta = \beta_{ref} - \hat{\beta}$$

adaptiv, d.h. abhängig von weiteren Größen wie Gierrate $\dot{\psi}$, Gierratenregeldifferenz $\Delta\dot{\psi}$ Fahrzeuggeschwindigkeit $V_x$, und Reifen/Fahrbahn Reibungskoeffizient m ein das Fahrzeug stabilisierendes Zusatzgiermoment nach Gl. (F4.11) berechnet.

F4.11

$$T_{req\_beta} = \begin{cases} f(\hat{\beta}, \Delta\beta, V_x, \dot{\psi}, \Delta\dot{\psi}, \mu) & \begin{cases} \text{für } \hat{\beta} > \beta_{ref}, \ \dot{\psi} < 0, V_x > V_{\min} \\ \text{für } \hat{\beta} < -\beta_{ref}, \dot{\psi} > 0, V_x > V_{\min} \end{cases} \\ 0 & \text{sonst} \end{cases}$$

Ein Zusatzmoment $T_{req\_beta}$ wird berechnet, wenn der geschätzte Schwimmwinkel $\hat{\beta}$ außerhalb des Bandes

begrenzt durch $b_{ref}$ liegt, wie in Fig. 6 dargestellt. Eine weitere Bedingung ist die Richtung der Gierrate. Dreht das Auto schon in die 'richtige' Richtung z.B. $\beta > \beta_{ref}$ und $\dot{\psi} > 0$ so ist kein Zusatzmoment mehr nötig. Unterhalb einer Geschwindigkeit $V_{min}$ ist keine Regelung nötig.

Sind die Bedingungen für ein Zusatzmoment erfüllt, so wird das Zusatzmoment vorzugsweise proportional zur Regelabweichung D$b$ berechnet. In Fig.7 ist ein typischer Verlauf für das angeforderte Zusatzmoment $T_{req\_beta}$ in Abhängigkeit von der Regelabweichung D$b$ dargestellt. Das Nullmoment $T_{0,req\_beta}$ ist notwendig um bei Regeleintritt ein signifikantes Zusatzgiermoment zur Fahrstabilisierung zu erreichen. Um den Regelein- und austritt jedoch weicher zu gestalten, ist es günstig für kleine Regelabweichungen D$b$ < D$b_0$ eine endliche Steigung vorzusehen. Ein typischer Wert ist D$b_0$ = 0.5°bis 1,5°.

Es ist weiterhin sinnvoll das angeforderte Zusatzmoment $T_{req-beta}$ wie in Fig.7 dargestellt in Abhängigkeit des Reibwertes m zu erhöhen.

Momentenarbitrierung

Im Block 406 erfolgt eine Überlagerung des nach Gl. (F4.11) bestimmten Giermoments mit dem Giermoment aus dem Standard-ESP in folgender Form:

F4.12

$$T_{req} = \begin{cases} T_{req\_ESP} + T_{req\_beta} & \text{für} \quad sign(T_{req\_ESP}) = sign(T_{req\_beta}) \\ T_{req\_ESP} & \text{für} \quad sign(T_{req\_ESP}) \neq sign(T_{req\_beta}) \end{cases}$$

Deaktivierungslogik

Eine Deaktivierung der Schwimmwinkelregelung erfolgt bei Rückwärtsfahrt oder Fahrt in einer Steilkurve und wenn die Differenz der Schräglaufwinkel an der Vorder- und Hinterachse groß ist, d.h.

F4.13

$$\Delta\alpha = |\hat{\alpha}_v - \hat{\alpha}_h| > \Delta\alpha_{max}$$

Momentenverteilung

Die Bestimmung der Radbremsdruck-Sollwerte aus dem angeforderten Zusatz-Giermoment erfolgt ähnlich wie beim Standard-ESP. Der Unterschied zum Standard-ESP besteht darin, daß bei aktiver Schwimmwinkelregelung zusätzlich zur Druckanforderung an den Vorderrädern auch an den Hinterrädern Druck angefordert wird. Hierbei wird unterschieden, ob die Schwimmwinkelregelung allein aktiv ist, oder ob zusätzlich das Standard-ESP aktiv ist.

**Patentansprüche**

1. herfahren zur online Ermittlung des Schwimmwinkels ($\hat{\beta}$) und gegebenenfalls weiterer Fahrzeugzustandsgrößen ($\hat{x}$) für ein Kraftfahrzeug mit den Schritten

   - Ermitteln von geschätzten Ausgangsgrößen ($\hat{y}_m$), umfassend zumindest die Querbeschleunigung ($\widehat{a_y}$) und die Gierrate ($\hat{\dot{\psi}}$), nach Maßgabe ermittelter und/oder geschätzter Eingangsgrößen ($u$), umfassend zumindest ermittelte Reifen- oder Radlängskräfte ($F_x$) und geschätzte oder ermittelte Aufstandskräfte ($\hat{F}_z$ oder $F_z$), und vorgegebener oder vorhergesagter Fahrzeugzustandsgrößen ($\hat{x}$) und gegebenenfalls weiterer Größen,
   - Vergleichen der geschätzten Ausgangsgrößen ($\hat{y}_m$) mit gemessenen Ausgangsgrößen ($y_m$),
   - Ermitteln des geschätzten Schwimmwinkels ($\hat{\beta}$) und gegebenenfalls weiterer geschätzter Fahrzeugzustandsgrößen ($\hat{x}$), nach Maßgabe des Vergleichsergebnisses und ggf. weiterer Kriterien, **dadurch gekennzeichnet, dass** mindestens das Fehlersignal ($e(t_k)$) aus dem Vergleich der geschätzte Gierrate ($\hat{\dot{\psi}}$) mit der gemessenen Gierrate ($\dot{\psi}$) mit einer Verstärkungsmatrix (K) zu einer Korrektur der geschätzten Fahrzeugzustandsgrößen ($\hat{x}$)

verwendet wird.

2. Verfahren nach Anspruch 1, **gekennzeichnet durch** den Schritt:

   Modellbasiertes Ermitteln der vorhergesagten Fahrzeugzustandsgrößen $\hat{x}$ nach Maßgabe ermittelter und/oder geschätzter Eingangsgrößen $u$ und den Größen der Fahrdynamik $\hat{x}$ $(t_k/t_k)$ .

3. erfahren nach Anspruch 1 oder 2, **dadurch gekennzeichnet, daß** die folgenden Eingangsgrößen $u(t) = \hat{V}_x, \delta, F_x, \hat{F}_z$ oder $F_z, \hat{\mu}_i$ oder $u_i$ bei der Schätzung der vorhergesagten Fahrzeugzustandsgrößen $\hat{x}$ und bei der Ermittlung der Größen der Fahrdynamik $\hat{x}(t_k/t_k)$ berücksichtigt werden, mit $\hat{V}_x$ = geschätzte Fahrzeuglängsgeschwindigkeit, $\delta$ = der gemessene Lenkwinkel, $F_x$ = die ermittelten Reifen- oder Radlängskräfte, $\hat{F}_z$ = die geschätzten Aufstandskräfte oder $F_z$ = die ermittelten Aufstandskräfte, $\hat{\mu}_i$ = die geschätzten Reibungs-Koeffizienten für den Reifen-Fahrbahn Kontakt oder $\mu_i$ = die ermittelten Reibungs-Koeffizienten für den Reifen-Fahrbahn Kontakt.

4. Verfahren nach einem der Ansprüche 1 bis 3, **dadurch gekennzeichnet, daß** als Größen der Fahrdynamik und der vorhergesagten Fahrzeugzustandsgrößen $\hat{x} = [\hat{V}_y, \dot{\hat{\psi}}]^T$ oder $\hat{x} = [\hat{V}_y, \dot{\hat{\psi}}, \hat{F}_d]^T$ die Fahrzeugquergeschwindigkeit $\hat{V}_y$, die Gierrate $\dot{\hat{\psi}}$ und die Störkräfte $\hat{F}_d$, die als nicht meßbare Eingangsgrößen geschätzt werden, ermittelt werden.

5. Verfahren nach Anspruch 4, **dadurch gekennzeichnet, daß** als weitere Größen der Fahrdynamik und der vorhergesagten Fahrzeugzustandsgrößen $\hat{x} = [\hat{T}_d, \mu_i]^T$ die Störmomente $M_d$ und die Reibungs-Koeffizienten $\mu_i$ als nicht messbare Eingangsgrößen ermittelt werden.

6. Verfahren nach einem der Ansprüche 1 bis 5, **dadurch gekennzeichnet, dass** die vorhergesagten Fahrzeugzustandsgrößen $\hat{x}$ für den nächsten Abtastzeitpunkt $t_{k+1}$ durch Integration nach der nichtlinearen Gleichung

$$\hat{\mathbf{x}}(t_{k+1}|t_k) = \hat{\mathbf{x}}(t_k|t_k) + \int_{t_k}^{t_{k+1}} \mathbf{f}(\hat{\mathbf{x}}(t), \mathbf{u}(t))\ dt$$

mit der Anfangsbedingung $\hat{x}(t_k / t_k)$ erfolgt, wobei

   $\hat{x}$ geschätzter Zustandsvektor,
   $f(.)$ kontinuierliche, nichtlineare Systemgleichungen
   $\mathbf{x}(t_k)$ Signal zum diskreten Zeitpunkt $t_k$ . (aktueller Zeitpunkt)
   $\hat{\mathbf{x}}(t_k|t_{k-1})$ geschätztes Signal zum Zeitpunkt $t_k$, wobei nur Informationen vom letzten Zeitpunkt $t_{k-1}$ verwendet sind
   $\hat{\mathbf{x}}(t_k|t_k)$ geschätztes Signal zum Zeitpunkt $t_k$, wobei Informationen vom aktuellen Zeitpunkt $t_k$ verwendet sind
   $\hat{\mathbf{x}}(t_{k+1}|t_k)$ vorhergesagtes Signal für den nächsten Zeitpunkt
   $t_{k+1}$, wobei nur Informationen vom aktuellen Zeitpunkt $t_k$ verwendet sind
   $t_k$ diskreter Zeitpunkt

ist.

7. Verfahren nach einem der Ansprüche 1 bis 6, **dadurch gekennzeichnet, daß** als Ausgangsgröße $\hat{y}_m = [\hat{a}_y]$ die Querbeschleunigung $a_y$ geschätzt wird.

8. Verfahren nach Anspruch 7, **dadurch gekennzeichnet, daß** als weitere Ausgangsgröße $\hat{y}_m = [\dot{\psi}]$ die Gierrate $\dot{\psi}$ geschätzt wird.

9. Verfahren nach einem der Ansprüche 1 bis 6, **dadurch gekennzeichnet, daß** als weitere Ausgangsgrößen $\hat{y}_m = [\hat{F}_y]^T$ die Reifen- oder Radquerkräfte $F_y$. geschätzt werden.

10. Verfahren nach einem der Ansprüche 1 bis 9, **dadurch gekennzeichnet, dass** die Ausgangsgrößen $\hat{y}_m$ für den Abtastzeitpunkt $t_k$ nach der diskreten, nichtlinearen Gleichung $h_m$

$$\hat{\mathbf{y}}_m(\mathbf{t}_k|\mathbf{t}_{k-1}) = \mathbf{h}_m(\hat{\mathbf{x}}(\mathbf{t}_k|\mathbf{t}_{k-1}), \mathbf{u}_m(\mathbf{t}_k))$$

aus den Fahrzeugzustandsgrößen $\hat{\mathbf{x}}(t_k|t_{k-1})$ und den Eingangsgrößen $u_m(t_k)$ geschätzt werden, mit

$\hat{\mathbf{y}}_m$ geschätzter Ausgangsvektor der messbaren Ausgänge
$\hat{x}$ geschätzter Zustandsvektor,
$u_m$ Eingangsvektor der messbaren Eingänge
$\mathbf{h}_m(.)$ diskrete, nichtlineare Messgleichungen
$\hat{x}(t_k|t_{k-1})$ geschätztes Signal zum Zeitpunkt $\mathbf{t}_k$, wobei nur Informationen vom letzten Zeitpunkt $\mathbf{t}_{k-1}$ verwendet sind
$\hat{y}(t_k|t_{k-1})$ geschätztes Signal zum Zeitpunkt $\mathbf{t}_k$, wobei nur Informationen vom letzten Zeitpunkt $\mathbf{t}_{k-1}$ verwendet sind
$t_k$ diskreter Zeitpunkt.

11. Verfahren nach einem der Ansprüche 1 bis 10, **dadurch gekennzeichnet, daß** mindestens eine der geschätzten Ausgangsgrößen $\hat{y}_m = [\hat{F}_y, \hat{a}_y, \dot{\hat{\psi}}]^T$ mit mindestens einer der ermittelten, direkt oder indirekt mittels Sensoren erfaßten, Ausgangsgrößen $y_m(t_k) = [F_y, a_y, \dot{\psi}]^T$ verglichen wird und die Vergleichsergebnisse $e(t_k)$ vorzugsweise über eine Verstärkungsmatrix K an einem Summationspunkt für die Korrektur der Fahrzeugzustandsgröße $\hat{x}(t_k|t_{k-1})$ zur Verfügung gestellt werden, wobei $\hat{x}(t_k|t_{k-1})=$ geschätztes Signal zum Zeitpunkt $t_k$, wobei Informationen vom letzten Zeitpunkt $t_{k-1}$ verwendet sind.

12. Verfahren nach einem der Ansprüche 1 bis 11, **dadurch gekennzeichnet, dass** die Verstärkungsmatrix K zu jedem Zeitpunkt $t_k$ nach der Beziehung

$$K(t_k) = f(\hat{A}, G)$$

bestimmt wird, mit G = Informationsgehalt der ermittelten oder gemessenen Signale und $A$ = geschätzter Arbeitspunkt des nichtlinearen Fahrzeugmodells.

13. Verfahren nach einem der Ansprüche 1 bis 12, **dadurch gekennzeichnet, dass** die Korrektur der Größen der Fahrdynamik nach der Beziehung

$$\hat{\mathbf{x}}(t_k|t_k) = \hat{\mathbf{x}}(t_k|t_{k-1}) + \mathbf{K}(t_k)\mathbf{e}(t_k)$$

erfolgt.

14. Verfahren nach einem der Ansprüche 1 bis 13, **gekennzeichnet durch** den Schritt: Ermitteln der geschätzten Regelgrößen $y_r$ zum Zeitpunkt $t_k$ unter Verwendung von Informationen vom aktuellen Zeitpunkt aus den Größen der Fahrdynamik $\hat{\mathbf{x}}(t_k|t_k)$ und den Eingangsgrößen $u_m(t_k)$ nach der Beziehung,

$$\hat{\mathbf{y}}_r(\mathbf{t}_k|\mathbf{t}_k) = \mathbf{h}_r(\hat{\mathbf{x}}(\mathbf{t}_k|\mathbf{t}_k), \mathbf{u}_m(\mathbf{t}_k)) ,$$

mit $u_m(t_k)=$ **Vektor** der erfaßten diskreten Eingangsgrößen.

15. Verfahren nach einem der Ansprüche 1 bis 13, **gekennzeichnet durch** den Schritt: Ermitteln der geschätzten Regelgrößen $y_r$ zum Zeitpunkt $t_k$ unter Verwendung von Informationen vom letzten Zeitpunkt aus den Fahrzeugzustandsgrößen $\hat{x}(t_k|t_{k-1})$ und den Eingangsgrößen $u_m(t_k)$ nach der Beziehung,

$$\hat{\mathbf{y}}_r(\mathbf{t}_k|\mathbf{t}_{k-1}) = \mathbf{h}_r(\hat{\mathbf{x}}(\mathbf{t}_k|\mathbf{t}_{k-1}), \mathbf{u}_m(\mathbf{t}_k)) \ ,$$

mit $u_m(t_k)$ = Vektor der erfaßten diskreten Eingangsgrößen.

16. Verfahren nach einem der Ansprüche 1 bis 15, **gekennzeichnet durch** die Schritte:

Ermitteln eines geschätzten Schwimmwinkels $\hat{\beta}$ als Regegelgröße $\hat{\mathbf{y}}_r(t_k|t_{k-1})$ bzw. $\hat{\mathbf{y}}_r(t_k|t_k)$,
Vergleichen des geschätzten Schwimmwinkels $\hat{\beta}$ mit einer Schwimmwinkel-Referenzgröße $\beta_{ref}$,
Bilden eines Zusatzgiermoments $T_{req}$ aus der geschätzten Differenz aus der Schwimmwinkel-Referenzgröße $\beta_{ref}$ und dem Schwimmwinkel $\hat{\beta}$ und einer Differenz aus einer Gierraten-Referenzgröße $\dot{\psi}_{ref}$ und einer Gierrate $\dot{\psi}$ oder $\hat{\dot{\psi}}$ oder $\dot{\psi}_{linear}$ und Ansteuerung mindestens einer Radbremse des Kraftfahrzeugs nach Maßgabe des Zusatzgiermoments $T_{req}$.

17. Verfahren nach einem der Ansprüche 1 bis 16, **dadurch gekennzeichnet, daß** die Schwimmwinkel-Referenzgröße $\beta_{ref}$ eine nach Maßgabe der Geschwindigkeit $V_x$, z.B. $V_{ref}$, des Fahrzeugs variable Aktivierungsschwelle ist.

18. Verfahren nach einem der Ansprüche 1 bis 16, **dadurch gekennzeichnet, daß** die Schwimmwinkel-Referenzgröße $\beta_{ref}$ in einem dynamischen Modell, insbesondere dem Einspurmodell, ermittelt wird.

19. Verfahren nach einem der Ansprüche 1 bis 18, **dadurch gekennzeichnet, dass** die Gierrate $\hat{\dot{\psi}}$ als Regelgröße $\hat{\mathbf{y}}_r(t_k|t_{k-1})$ bzw. $\hat{\mathbf{y}}_r(t_k|t_k)$ geschätzt wird.

20. Verfahren nach einem der Ansprüche 1 bis 19, **dadurch gekennzeichnet, daß** die geschätzte Gierrate $\hat{\dot{\psi}}$ in Abhängigkeit von einer gemessenen Gierrate $\dot{\psi}$ geringerer Güte oder einem Ersatzsignal $\dot{\psi}_{linear}$ gebildet wird.

21. Verfahren nach einem der Ansprüche 1 bis 20, **dadurch gekennzeichnet, daß** das Zusatzgiermoment $T_{req}$ nach Maßgabe der gemessenen Gierrate $\dot{\psi}$ gebildet wird.

22. Verfahren nach einem der Ansprüche 1 bis 21, **dadurch gekennzeichnet, daß** die Schräglaufwinkel der Reifen für die Vorderachse $\hat{\alpha}_v$ und die Hinterachse $\hat{\alpha}_h$ als Regelgröße $\hat{\mathbf{y}}_r(t_k|t_{k-1})$ bzw. $\hat{\mathbf{y}}_r(t_k|t_k)$ geschätzt werden.

23. Verfahren nach einem der vorangegangenen Ansprüche, **dadurch gekennzeichnet, dass** es für eine ESP- oder Fahrwerksregelung eingesetzt wird.

24. Verfahren nach einem der vorhergehenden Ansprüche, **dadurch gekennzeichnet, dass** mit dem ermittelten Schwimmwinkel ein aktiver Lenkeingriff durchgeführt wird.

25. Fahrdynamikregler, umfassend eine

- erste Ermittlungseinheit (402) zur Schätzung der Regelgrößen Schwimmwinkel ($\dot{\beta}$) und/oder Schräglaufwinkel ($\hat{a}_v$, $\hat{\alpha}_h$) aus den Eingangsgrößen $V_x, \delta, F_x, \dot{\psi}, \hat{\mu}, \alpha_y, \hat{F}_z$, und/oder ggf. weiteren Eingangsgrößen $F_z$, $\dot{\psi}_{linear}$
- Deaktivierungslogik (405) zur Abschaltung der Schwimmwinkelregelung nach Maßgabe der Eingangsgrößen $\hat{\alpha}_v$, $\hat{\alpha}_h$ und/oder Größen, die Fahrsituationen des Kraftfahrzeugs wiedergeben, wie z.B. bei Rückwärtsfahrt, Fahrt in einer Steilkurve u.dgl.
- zweite Ermittlungseinheit (404) zur adaptiven Schwimmwinkel-Momentenberechnung aus den Eingangsgrößen

$$\hat{\beta}, \ \beta_{ref}, \dot{\psi}, V_{ref} \quad bzw. \quad Vx, \hat{\mu}_i,$$

- dritte Ermittlungseinheit (406) zur Arbitrierung eines Zusatzgiermoments $T_{req}$ aus dem Giermoment $T_{reg\_ESP}$ und $T_{reg\_beta}$, **dadurch gekennzeichnet, dass** die erste Ermittlungseinheit (402) mit einem Aufstandskraftmodell (403) zum Schätzen der Aufstandskräfte ($\hat{F}_z$) des Kraftfahrzeugs aus den der im Fahrzeugschwerpunkt angreifenden Quer- und Längsbeschleunigungen $a_y, \hat{a}_x$ verbunden ist.

26. Fahrdynamikregler nach Anspruch 25 , **dadurch gekennzeichnet, daß** die erste Ermittlungseinheit (402) mit einem Aufstandskraftmodell (403) zum Schätzen der Aufstandskräfte $\hat{F}_z$ des Kraftfahrzeugs aus den Eingangsgrößen $a_y, \hat{a}_x$ verbunden ist.

27. Fahrdynamikregler nach einem der Ansprüche 25 und 26, **dadurch gekennzeichnet, daß** die zweite Ermittlungseinheit (404) mit einem Referenzmodell (401) zur Ermittlung der nach Maßgabe der Geschwindigkeit $V_x$ bzw. $V_{ref}$ variablen Aktivierungsschwelle verbunden ist.

**Claims**

1. Method for establishing the attitude angle ($\hat{\beta}$) and possibly further vehicle state variables ($\hat{x}$) for a motor vehicle online, comprising the following steps:

    - establishing estimated output variables ($\hat{y}_m$), at least comprising the transverse acceleration ($\hat{a}_y$) and the yaw rate ($\dot{\hat{\psi}}$) according to established and/or estimated input variables ($u$), at least comprising established tyre or wheel longitudinal forces ($F_x$) and estimated or established contact forces ($\hat{F}_z$ or $F_z$) and predetermined or predicted vehicle state variables ($\hat{x}$) and optionally further variables,
    - comparing the estimated output variables ($y_m$) to measured output variables ($y_m$),
    - establishing the estimated attitude angle ($\hat{\beta}$) and possibly further estimated vehicle state variables ($\hat{x}$) according to the comparison result and optionally further criteria, **characterized in that** at least the error signal ($e(t_k)$) from the comparison of the estimated yaw rate ($\dot{\hat{\psi}}$) with the measured yaw rate ($\dot{\psi}$) with an amplification matrix (K) is used to correct the estimated vehicle state variables ($\hat{\mathbf{x}}$).

2. Method according to Claim 1, **characterized by** the following step:

    - establishing, on the basis of a model, the predicted vehicle state variables $\hat{x}$ according to established and/or estimated input variables $u$ and the variables of the driving dynamics $\hat{x}(t_k/t_k)$.

3. Method according to Claim 1 or 2, **characterized in that** the following input variables $u(t)=\hat{V}_x, \delta, F_x, \hat{F}_z$ or $F_z, \hat{\mu}_i$ or $\mu_i$ are considered when estimating the predicted vehicle state variables $\hat{x}$ and when establishing the variables of the driving dynamics $\hat{x}(t_k/t_k)$, where $\hat{V}_x$ = estimated vehicle longitudinal speed, $\delta$ = the measured steering angle, $F_x$ = the established tyre or wheel longitudinal forces, $\hat{F}_z$ = the estimated contact forces or $F_z$ = the established contact forces, $\hat{\mu}_i$ = the estimated coefficients of friction for the tyre/roadway contact or $\mu_i$ = the established coefficients of friction for the tyre/roadway contact.

4. Method according to one of Claims 1 to 3, **characterized in that** the vehicle transverse speed $\hat{V}_y$, the yaw rate $\dot{\hat{\psi}}$ and the disturbing forces $\hat{F}_d$, which are estimated as non-measurable input variables, are established as variables of the driving dynamics and the predicted vehicle state variables $\hat{x} = [\hat{V}_y, \dot{\hat{\psi}}]^T$ or $\hat{x} = [\hat{V}_y, \dot{\hat{\psi}}, \hat{F}_d]^T$.

5. Method according to Claim 4, **characterized in that** the disturbing moments $M_d$ and the coefficients of friction $\mu_i$ as non-measurable input variables are established as further variables of the driving dynamics and the predicted vehicle state variables $\hat{x} = [\hat{T}_d, \mu_i]^T$.

6. Method according to one of Claims 1 to 5, **characterized in that** the predicted vehicle state variables $\hat{x}$ for the next sampling time $t_{k+1}$ are brought about by integrating according to the nonlinear equation

$$\hat{\mathbf{x}}(t_{k+1}|t_k) = \hat{\mathbf{x}}(t_k|t_k) + \int_{t_k}^{t_{k+1}} \mathbf{f}(\hat{\mathbf{x}}(t), \mathbf{u}(t)) dt$$

with the initial condition $\hat{x}(t_k/t_k)$, where

$\hat{x}$ is an estimated state vector,

$f(\cdot)$ are continuous, nonlinear system equations,

$\mathbf{x}(\mathbf{t}_k)$ is a signal at the discrete time $\mathbf{t}_k$ (current time),

$\hat{\mathbf{x}}(\mathbf{t}_k|\mathbf{t}_{k-1})$ is the estimated signal at the time $\mathbf{t}_k$, with only information from the previous time $\mathbf{t}_{k-1}$ being used,

$\hat{\mathbf{x}}(\mathbf{t}_k|\mathbf{t}_k)$ is the estimated signal at the time $\mathbf{t}_k$, with information from the current time $\mathbf{t}_k$ being used,

$\hat{\mathbf{x}}(\mathbf{t}_{k+1}|\mathbf{t}_k)$ is the predicted signal for the next time $\mathbf{t}_{k+1}$, with only information from the current time $\mathbf{t}_k$ being used, and

$t_k$ is a discrete time.

7. Method according to one of Claims 1 to 6, **characterized in that** the transverse acceleration $a_y$ is estimated as output variable $\hat{y}_m = [\hat{a}_y]$.

8. Method according to Claim 7, **characterized in that** the yaw rate $\dot{\psi}$ is estimated as further output variable $\hat{y}_m = [\dot{\psi}]$.

9. Method according to one of Claims 1 to 6, **characterized in that** the tyre or wheel transverse forces $F_y$ are estimated as further output variables $\hat{y}_m = [\hat{F}_y]^T$.

10. Method according to one of Claims 1 to 9, **characterized in that** the output variables $\hat{y}_m$ for the sampling time $\mathbf{t}_k$ are estimated according to the discrete, nonlinear equation $h_m$

$$\hat{y}_m\left(t_k\left|t_{k-1}\right.\right)=\mathbf{h}_m\left(\hat{\mathbf{x}}\left(t_k\left|t_{k-1}\right.\right),\mathbf{u}_m\left(t_k\right)\right)$$

from the vehicle state variables $\hat{\mathbf{x}}(\mathbf{t}_k|\mathbf{t}_{k-1})$ and the input variables $u_m(t_k)$, where

$\hat{y}_m$ is an estimated output vector of the measurable outputs,

$\hat{x}$ is an estimated state vector,

$u_m$ is an input vector of the measurable inputs, $\mathbf{h}_m(\cdot)$ are discrete, nonlinear measurement equations,

$\hat{\mathbf{x}}(\mathbf{t}_k|\mathbf{t}_{k-1})$ is the estimated signal at the time $\mathbf{t}_k$, with only information from the previous time $\mathbf{t}_{k-1}$ being used,

$\hat{y}(\mathbf{t}_k|\mathbf{t}_{k-1})$ is the estimated signal at the time $\mathbf{t}_k$, with only information from the previous time $\mathbf{t}_{k-1}$ being used, and

$t_k$ is a discrete time.

11. Method according to one of Claims 1 to 10, **characterized in that** at least one of the estimated output variables $\hat{y}_m$ $=[\hat{F}_y,\hat{a}_y,\dot{\hat{\psi}}]^T$ is compared to at least one of the established output variables $y_m(t_k)=[F_y,\alpha_y,\dot{\psi}]^T$, which were registered directly or indirectly by means of sensors, and the comparison results $e(t_k)$ are preferably made available via an amplification matrix K at a summation point for correcting the vehicle state variable $\hat{\mathbf{x}}(\mathbf{t}_k|\mathbf{t}_{k-1})$ where $\hat{\mathbf{x}}(\mathbf{t}_k|\mathbf{t}_{k-1})$ = the estimated signal at the time $\mathbf{t}_k$, with information from the previous time $\mathbf{t}_{k-1}$ being used.

12. Method according to one of Claims 1 to 11, **characterized in that** the amplification matrix K is determined at each time $t_k$ according to the relationship

$$K\left(t_k\right)=f\left(\hat{A},\overline{G}\right),$$

where G = information content of the established or measured signals and $A$ = estimated working point of the nonlinear vehicle model.

13. Method according to one of Claims 1 to 12, **characterized in that** the variables of the driving dynamics are corrected according to the relationship

$$\hat{\mathbf{x}}\left(t_k\left|t_k\right.\right)=\hat{\mathbf{x}}\left(t_k\left|t_{k-1}\right.\right)+\mathbf{K}\left(t_k\right)\mathbf{e}\left(t_k\right).$$

14. Method according to one of Claims 1 to 13, **characterized by** the following step: establishing the estimated controlled

variables $y_r$ at the time $t_k$ using information from the current time from the variables of the driving dynamics $\hat{\mathbf{x}}(t_k|t_{k-1})$ and the input variables $u_m(t_k)$ according to the relationship $\hat{\mathbf{y}}_r(t_k|t_k)=\boldsymbol{h}_r(\hat{\mathbf{x}}(t_k|t_k),\boldsymbol{u}_m(t_k))$, where $u_m(t_k)$ = **vector** of the registered discrete input variables.

15. Method according to one of Claims 1 to 13, **characterized by** the following step: establishing the estimated controlled variables $y_r$ at the time $t_k$ using information from the previous time from the vehicle state variables $\hat{\mathbf{x}}(t_k|t_{k-1})$ and the input variables $u_m(t_k)$ according to the relationship $\hat{\mathbf{y}}_r(t_k|t_{k-1})=\boldsymbol{h}_r(\hat{\mathbf{x}}(t_k|t_{k-1}),\mathbf{u}_m(t_k))$, where $u_m(t_k)$ = vector of the registered discrete input variables.

16. Method according to one of Claims 1 to 15, **characterized by** the following steps:

establishing an estimated attitude angle $\hat{\beta}$ as controlled variable $\hat{\boldsymbol{y}}_r(t_k|t_{k-1})$ or $\hat{\boldsymbol{y}}_r(t_k|t_k)$,
comparing the estimated attitude angle $\hat{\beta}$ to an attitude angle reference variable $\beta_{ref}$,
forming an additional yaw moment $T_{req}$ from the estimated difference between the attitude angle reference variable $\beta_{ref}$ and the attitude angle $\hat{\beta}$ and a difference between a yaw rate reference variable $\dot{\psi}_{ref}$ and a yaw rate $\dot{\psi}$ or $\dot{\hat{\psi}}$ or $\dot{\psi}_{linear}$, and driving at least one wheel brake of the motor vehicle according to the additional yaw moment $T_{req}$.

17. Method according to one of Claims 1 to 16, **characterized in that** the attitude angle reference variable $\beta_{ref}$ is an activation threshold that is variable according to the speed $V_x$, e.g. $V_{ref}$, of the vehicle.

18. Method according to one of Claims 1 to 16, **characterized in that** the attitude angle reference variable $\beta_{ref}$ is established in a dynamic model, in particular the single-track model.

19. Method according to one of Claims 1 to 18, **characterized in that** the yaw rate $\dot{\hat{\psi}}$ is estimated as a controlled variable $\hat{\boldsymbol{y}}_r(t_k|t_{k-1})$ or $\hat{\boldsymbol{y}}_r(t_k|t_k)$.

20. Method according to one of Claims 1 to 19, **characterized in that** the estimated yaw rate $\dot{\hat{\psi}}$ is formed as a function of a measured yaw rate $\dot{\psi}$ of lower quality or a substitute signal $\dot{\psi}_{linear}$.

21. Method according to one of Claims 1 to 20, **characterized in that** the additional yaw moment $T_{req}$ is formed according to the measured yaw rate $\dot{\psi}$.

22. Method according to one of Claims 1 to 21, **characterized in that** the slip angles of the tyres for the front axle $\hat{\alpha}_v$ and the rear axle $\hat{\alpha}_h$ are estimated as controlled variable $\hat{\boldsymbol{y}}_r(t_k|t_{k-1})$ or $\hat{\boldsymbol{y}}_r(t_k|t_k)$.

23. Method according to one of the preceding claims, **characterized in that** it is used for an ESP or suspension control.

24. Method according to one of the preceding claims, **characterized in that** an active steering intervention is performed with the established attitude angle.

25. Vehicle dynamics controller, comprising a

- first establishment unit (402) for estimating the control variables of attitude angle ($\dot{\beta}$) and/or slip angle ($\hat{\alpha}_v$, $\hat{\alpha}_h$) from the input variables $V_x, \delta, F_x, \dot{\psi}, \hat{\mu}, \alpha_y, \hat{F}_z$, and/or optionally further input variables $F_z$, $\dot{\psi}_{linear}$,
- deactivation logic (405) for deactivating the attitude angle control according to the input variables $\hat{\alpha}_v$, $\hat{\alpha}_h$ and/or variables which reproduce driving situations of the motor vehicle, such as e.g. in the case of reverse driving, driving in a banked bend, etc.,
- second establishment unit (404) for the adaptive attitude angle moment calculation from the input variables $\hat{\beta}, \beta_{ref}, \dot{\psi}, V_{ref}$ or $Vx, \hat{\mu}_i$,
- third establishment unit (406) for arbitrating an additional yaw moment $T_{req}$ from the yaw moment $T_{reg\_ESP}$ and $T_{reg\_beta}$,

**characterized in that** the first establishment unit (402) is connected to a contact force model (403) for estimating the contact forces ($\hat{F}_z$) of the motor vehicle from the transverse and longitudinal accelerations $\alpha_y, \alpha_x$ acting at the centre of gravity of the vehicle.

**26.** Vehicle dynamics controller according to Claim 25, **characterized in that** the first establishment unit (402) is connected to a contact force model (403) for estimating the contact forces $\hat{F}_z$ of the motor vehicle from the input variables $\hat{a}_y, \hat{a}_x$.

**27.** Vehicle dynamics controller according to either of Claims 25 and 26, **characterized in that** the second establishment unit (404) is connected to a reference model (401) for establishing the activation threshold which is variable according to the speed $V_x$ or $V_{ref}$.

**Revendications**

**1.** Procédé de détermination en ligne de l'angle de glissement ($\hat{\beta}$) et éventuellement d'autres grandeurs d'état de véhicule ($\hat{x}$) pour un véhicule automobile, comprenant les étapes suivantes :

- détermination de grandeurs de sortie estimées ($\hat{y}_m$), comprenant au moins l'accélération transversale ($\hat{a}_y$) et le taux de lacet ($\hat{\dot{\psi}}$), d'après les indications de grandeurs d'entrée (u) déterminées et/ou estimées, comprenant au moins des forces longitudinales de pneu ou de roue ($F_x$) et des forces de contact au sol ($\hat{F}_z$ ou $F_z$) estimées ou déterminées et des grandeurs d'état de véhicule ($\hat{x}$) prédéfinies ou prédites et éventuellement des grandeurs supplémentaires,
- comparaison des grandeurs de sortie estimées ($\hat{y}_m$) avec des grandeurs de sortie mesurées ($y_m$),
- détermination de l'angle de glissement ($\hat{\beta}$) estimé et éventuellement de grandeurs d'état de véhicule ($\hat{x}$) estimées supplémentaires d'après les indications du résultat de la comparaison et éventuellement d'autres critères, **caractérisé en ce qu'**au moins le signal de défaut ($e(t_k)$) issu de la comparaison du taux de lacet estimé ($\hat{\dot{\psi}}$) avec le taux de lacet mesuré ($\dot{\psi}$) est utilisé avec une matrice d'amplification (K) en vue d'une correction des grandeurs d'état de véhicule ($\hat{x}$) estimées.

**2.** Procédé selon la revendication 1, **caractérisé par** l'étape suivante :

détermination basée sur un modèle des grandeurs d'état de véhicule prédites $\hat{x}$ d'après les indications de grandeurs d'entrée u déterminées et/ou estimées et des grandeurs de la dynamique de conduite $\hat{x}(t_k/t_k)$.

**3.** Procédé selon la revendication 1 ou 2, **caractérisé en ce que** les grandeurs d'entrée suivantes $u(t) = \hat{V}_x, \delta, F_x, \hat{F}_z$ ou $\hat{F}_z, \hat{\mu}_i$ ou $\mu_i$ sont prises en compte lors de l'estimation des grandeurs d'état de véhicule prédites $\hat{x}$ et lors de la détermination des grandeurs de la dynamique de conduite $\hat{x}(t_k/t_k)$, $\hat{V}_x$ désignant la vitesse longitudinale estimée du véhicule, $\delta$ l'angle de direction mesuré, $F_x$ les forces longitudinales de pneu ou de roue déterminées, $\hat{F}_z$ les forces de contact au sol estimées ou $F_z$ les forces de contact au sol déterminées, $\hat{\mu}_i$ les coefficients de frottement estimés pour le contact entre le pneu et la chaussée ou $\mu_i$ les coefficients de frottement déterminés pour le contact entre le pneu et la chaussée.

**4.** Procédé selon l'une des revendications 1 à 3, **caractérisé en ce que** les grandeurs déterminées de la dynamique de conduite et des grandeurs d'état de véhicule prédites $\hat{x} = [\hat{V}_y, \hat{\dot{\psi}}]^T$ ou $\hat{x} = [\hat{V}_y, \hat{\dot{\psi}}, \hat{F}_d]^T$ sont la vitesse transversale du véhicule $\hat{V}_y$, le taux de lacet $\hat{\dot{\psi}}$ et les forces parasites $\hat{F}_d$, lesquelles sont estimées en tant que grandeurs d'entrée non mesurables.

**5.** Procédé selon la revendication 4, **caractérisé en ce que** les grandeurs supplémentaires déterminées de la dynamique de conduite et des grandeurs d'état de véhicule prédites $\hat{x} = [\hat{T}_d, \mu_i]^T$ sont les couples parasites $M_d$ et les coefficients de frottement $\mu_i$ en tant que grandeurs d'entrée non mesurables.

**6.** Procédé selon l'une des revendications 1 à 5, **caractérisé en ce que** les grandeurs d'état de véhicule prédites $\hat{x}$ pour l'instant d'échantillonnage suivant $t_{k+1}$ sont obtenues par intégration d'après l'équation non linéaire

$$\hat{x}(t_{k+1}|t_k) = \hat{x}(t_k|t_k) + \int\limits_{t_k}^{t_{k+1}} f\big(\hat{x}(t), u(t)\big)dt$$

avec la condition initiale $\hat{x}(t_k|t_k)$, où

$\hat{x}$ désigne le vecteur d'état estimé,
f(.) des équations de système continues non linéaires,
$x(t_k)$ le signal à l'instant discret $t_k$ (instant actuel),
$x(t_k|t_{k-1})$ le signal estimé à l'instant $t_k$, seules des informations du dernier instant $t_{k-1}$ étant utilisées,
$\hat{x}(t_k|t_k)$ le signal estimé à l'instant $t_k$, des informations de l'instant actuel $t_k$ étant utilisées,
$\hat{x}(t_k|t_k)$ le signal prédit pour l'instant suivant $t_{k+1}$, seules des informations de l'instant actuel $t_k$ étant utilisées,
$t_k$ un instant discret.

7.  Procédé selon l'une des revendications 1 à 6, **caractérisé en ce que** la grandeur de sortie $\hat{y}_m = [\hat{a}_y]$ estimée est l'accélération transversale $a_y$.

8.  Procédé selon la revendication 7, **caractérisé en ce que** la grandeur de sortie supplémentaire $\hat{y}_m = [\dot{\Psi}]$ estimée est le taux de lacet $\dot{\Psi}$.

9.  Procédé selon l'une des revendications 1 à 6, **caractérisé en ce que** les grandeurs de sortie supplémentaires $\hat{y}_m = [\hat{F}_y]^T$ estimées sont les forces transversales de pneu ou de roue $F_y$.

10. Procédé selon l'une des revendications 1 à 9, **caractérisé en ce que** les grandeurs de sortie $\hat{y}_m$ pour l'instant d'échantillonnage $t_k$ sont estimées d'après l'équation non linéaire $h_m$

$$\hat{y}_m(t_k|t_{k-1}) = h_m(\hat{x}(t_k|t_{k-1}), u_m(t_k))$$

à partir des grandeurs d'état du véhicule $x(t_k|t_k - 1)$ et des grandeurs d'entrée $u_m(t_k)$ où

$\hat{y}_m$ désigne le vecteur de sortie estimé des sorties mesurables,
$\hat{x}$ le vecteur d'état estimé,
$u_m$ le vecteur d'entrée des entrées mesurables,
$h_m$ (.) des équations de mesure discrètes non linéaires, $\hat{x}(t_k|t_{k-1})$ le signal estimé à l'instant $t_k$, seules des informations du dernier instant $t_{k-1}$ étant utilisées, $\hat{y}(t_k|t_{k-1})$ le signal estimé à l'instant $t_k$, seules des informations du dernier instant $t_{k-1}$ étant utilisées,
$t_k$ un instant discret.

11. Procédé selon l'une des revendications 1 à 10, **caractérisé en ce qu'**au moins l'une des grandeurs de sortie estimées $\hat{y}_m = [\hat{F}_y, \hat{a}_y, \dot{\hat{\Psi}}]^T$ est comparée avec au moins l'une des grandeurs de sortie $y_m(t_k) = [F_y, \alpha_y, \dot{\Psi}]^T$ déterminées, captées directement ou indirectement à l'aide de capteurs, et les résultats de la comparaison $e(t_k)$ sont mis à disposition, de préférence par le biais d'une matrice d'amplification K à un point de totalisation pour la correction de la grandeur d'état du véhicule $\hat{x}(t_k|t_k - 1)$, $\hat{x}(t_k|t_k -1)$ étant le signal estimé à l'instant $t_k$, des informations du dernier instant $t_{k-1}$ étant utilisées.

12. Procédé selon l'une des revendications 1 à 11, **caractérisé en ce que** la matrice d'amplification K est déterminée à chaque instant $t_k$ d'après la relation $K(t_k) = f(\hat{A}, G)$, avec G désignant la teneur en informations des signaux déterminés ou mesurés et A le point de travail estimé du modèle de véhicule non linéaire.

13. Procédé selon l'une des revendications 1 à 12, **caractérisé en ce que** la correction des grandeurs de la dynamique de conduite s'effectue d'après la relation

$$\hat{x}(t_k|t_k) = \hat{x}(t_k|t_{k-1}) + K(t_k)e(t_k).$$

**14.** Procédé selon l'une des revendications 1 à 13, **caractérisé par** l'étape suivante : détermination des grandeurs de régulation estimées $y_r$ à l'instant $t_k$ en utilisant des informations de l'instant actuel issues des grandeurs de la dynamique de conduite $\hat{x}(t_k|tk)$ et des grandeurs d'entrée $u_m(t_k)$ d'après la relation

$$\hat{y}_r(t_k|t_k) = h_r(\hat{x}(t_k|t_k), u_m(t_k)), \quad u_m(t_k)$$

désignant le vecteur des grandeurs d'entrée discrètes détectées.

**15.** Procédé selon l'une des revendications 1 à 13, **caractérisé par** l'étape suivante : détermination des grandeurs de régulation estimées $y_r$ à l'instant $t_k$ en utilisant des informations de l'instant précédent issues des grandeurs d'état du véhicule $\hat{x}(t_k|t_{k-1})$ et des grandeurs d'entrée $u_m(t_k)$ d'après la relation

$$\hat{y}_r(t_k|t_{k-1}) = h_r(\hat{x}(t_k|t_k - 1), u_m(t_k)), \quad u_m(t_k)$$

désignant le vecteur des grandeurs d'entrée discrètes détectées.

**16.** Procédé selon l'une des revendications 1 à 15, **caractérisé par** les étapes suivantes :

détermination d'un angle de glissement estimé $\hat{\beta}$ en tant que grandeur de régulation $\hat{y}_r(t_k|t_{k-1})$ ou $\hat{y}_r(t_k|t_k)$, comparaison de l'angle de glissement estimé $\hat{\beta}$ avec une grandeur de référence de l'angle de glissement $\beta_{ref}$, formation d'un moment de lacet supplémentaire $T_{req}$ à partir de la différence estimée entre la grandeur de référence de l'angle de glissement $\beta_{ref}$ et l'angle de glissement $\hat{\beta}$ et d'une différence entre une grandeur de référence du taux de lacet $\dot{\Psi}_{ref}$ et un taux de lacet $\dot{\Psi}$ ou $\dot{\hat{\Psi}}$ ou $\dot{\Psi}_{linear}$ et
commande d'au moins un frein de roue du véhicule automobile d'après les indications moment de lacet supplémentaire $T_{req}$.

**17.** Procédé selon l'une des revendications 1 à 16, **caractérisé en ce que** la grandeur de référence de l'angle de glissement $\beta_{ref}$ est un seuil d'activation variable en fonction de l'indication de la vitesse $V_x$, par exemple $V_{ref}$, du véhicule.

**18.** Procédé selon l'une des revendications 1 à 16, **caractérisé en ce que** la grandeur de référence de l'angle de glissement $\beta_{ref}$ est déterminée dans un modèle dynamique, notamment le modèle à voie unique.

**19.** Procédé selon l'une des revendications 1 à 18, **caractérisé en ce que** le taux de lacet $\dot{\hat{\Psi}}$ est estimé en tant que grandeur de régulation $\hat{y}_r(t_k|t_{k-1})$ ou $\hat{y}_r(t_k|t_k)$.

**20.** Procédé selon l'une des revendications 1 à 19, **caractérisé en ce que** le taux de lacet estimé $\dot{\hat{\Psi}}$ est formé en fonction d'un taux de lacet mesuré $\dot{\Psi}$ de qualité inférieure ou d'un signal de substitution $\dot{\Psi}_{linear}$.

**21.** Procédé selon l'une des revendications 1 à 20, **caractérisé en ce que** le moment de lacet supplémentaire $T_{req}$ est formé d'après les indications du taux de lacet mesuré $\dot{\Psi}$.

**22.** Procédé selon l'une des revendications 1 à 21, **caractérisé en ce que** les angles de dérive des pneus pour l'essieu avant $\hat{\alpha}_v$ et l'essieu arrière $\hat{\alpha}_h$ sont estimés en tant que grandeur de régulation $\hat{y}_r(t_k|t_{k-1})$ ou $\hat{y}_r(t_k|t_k)$.

**23.** Procédé selon l'une des revendications précédentes, **caractérisé en ce qu'**il est mis en oeuvre pour une régulation ESP ou de train roulant.

**24.** Procédé selon l'une des revendications précédentes, **caractérisé en ce qu'**une intervention active dans la direction est réalisée avec l'angle de glissement déterminé.

25. Régulateur dynamique de conduite, comprenant

- une première unité de détermination (402) destinée à estimer les grandeurs de régulation que sont l'angle de glissement ($\dot{\beta}$) et/ou l'angle de dérive ($\hat{a}_v, \hat{\alpha}_h$) à partir des grandeurs d'entrée $\hat{V}_x, \delta, F_x, \dot{\psi}, \hat{\mu}, \alpha_y, \hat{F}_z$ et/ou éventuellement de grandeurs d'entrée supplémentaires $F_z, \dot{\Psi}_{linear}$,
- une logique de désactivation (405) destinée à mettre hors circuit la régulation de l'angle de glissement d'après les indications des grandeurs d'entrée $\hat{a}_v, \hat{\alpha}_h$ et/ou de grandeurs qui restituent les situations de conduite du véhicule automobile, comme par exemple en cas de marche arrière, de conduite dans un virage serré, et similaire,
- une deuxième unité de détermination (404) destinée au calcul adaptatif du moment de l'angle de glissement à partir des grandeurs d'entrée $\hat{\beta}, \beta_{ref}, \dot{\Psi}, V_{ref}$ ou $V_x, \hat{\mu}_i$,
- une troisième unité de détermination (406) destinée à l'arbitrage d'un moment de lacet supplémentaire $T_{req}$ à partir du moment de lacet $T_{reg\_ESP}$ et $T_{reg\_beta}$,

**caractérisé en ce que** la première unité de détermination (402) est liée à un modèle de force de contact au sol (403) afin d'estimer les forces de contact au sol ($\hat{F}_z$) du véhicule automobile à partir des accélérations transversales et longitudinales $a_y, \hat{a}_x$ qui sont appliquées au centre de gravité du véhicule.

26. Régulateur dynamique de conduite selon la revendication 25, **caractérisé en ce que** la première unité de détermination (402) est liée à un modèle de force de contact au sol (403) afin d'estimer les forces de contact au sol $\hat{F}_z$ du véhicule automobile à partir des grandeurs d'entrée $a_y, \hat{a}_x$.

27. Régulateur dynamique de conduite selon l'une des revendications 25 et 26, **caractérisé en ce que** la deuxième unité de détermination (404) est liée à un modèle de référence (401) afin de déterminer le seuil d'activation, variable d'après l'indication de la vitesse $V_x$ ou $V_{ref}$.

Fig. 1

Fig. 5

Fig. 2

EP 1 276 649 B1

26

nichtmessbare
Eingänge, Störungen
$z(t)$

messbare Eingänge $u(t)$

reales
Fahrzeug

Regelgrössen $y_r(t)$

messbare Ausgänge $y(t)$

$kT_A$

$w(t_k)$

$+$

$v(t_k)$

$+$

$kT_A$

$u_m(t_k)$

$y_m(t_k)$

Fahrzeugmodell

$\hat{x}(t_k|t_k)$

$+$

$+$

nichtlineare
Systemgleichungen
$f(.)$

$\int_{t_k}^{t_{k-1}}$

$\hat{x}(t_{k+1}|t_k)$

$z^{-1}$

$\hat{x}(t_k|t_{k-1})$

nichtlineare
Messgleichungen
$h_m(.)$

$\hat{y}_m(t_k|t_{k-1})$

$+$
$-$

$e(t_k)$

nichtlineare
Ausgangsgl.
$h_r(.)$

$\hat{y}_r(t_k|t_k)$

geschätzte
Regelgrössen

$K$

Verfahren zur Schätzung der Regelgrössen

Fig. 2a

EP 1 276 649 B1

Fig 3

$\hat{F}_{zi}$  $\hat{\mu}_i$  Linearitäts-Flag

$\beta_{ref}$

$V_{ref}$  $\dot{\psi}$  $\hat{\beta}$  $\hat{\alpha}_V$  $\hat{\alpha}_H$  $\hat{\mu}_i$  weitere Info

offen:    Gierraten - Regelung
geschl.: kombinierte Gierraten- / Schwimmwinkel - Regelung

$V_x$

$\delta$

$a_y$

$F_{xi}$

$F_{yi}$

$\dot{\psi}_{linear}$

$\dot{\psi}$

Verfahren zur Schätzung der Regelgrössen

$\hat{\beta}$

$\hat{\alpha}_v$

$\hat{\alpha}_h$

$\hat{\dot{\psi}}$

$\Delta\beta$

Regler

$G_\beta$

$T_{reg\_beta}$

(B)

$T_{req}$

Zusatz-Giermoment

$+$

$+$

$\Delta\dot{\psi}$

$G_{\dot{\psi}}$

$T_{reg\_ESP}$

$\dot{\psi}_{ref}$

(A)

| | Eingang in die Regelgrössenschätzung | |
|---|---|---|
| | $\hat{\dot{\psi}}_{linear}$ | $\dot{\psi}$ |
| $\hat{\dot{\psi}}$ | X kein Sensor oder Ausfall | X Sensor geringer Güte |
| $\dot{\psi}$ | — | X |

Regelung mit

Fig. 4

EP 1 276 649 B1

Fig. 6

Fig. 7

Fig. 8

## Standard ESP

## ESP mit Schwimmwinkelregelung

### Lenkwinkel und Schwimmwinkel

### Lenkwinkel und Schwimmwinkel

### Gierrate

### Gierrate

Zeit [s]

Zeit [s]

EP 1 276 649 B1

**EP 1 276 649 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 19744725 A1
- EP 0914997 A2
- DE 19620581